(19)

Europäisches
Patentamt
European
Patent Office
Office européen
des brevets

(11) **EP 2 479 915 A1**

(12) **EUROPEAN PATENT APPLICATION**
published in accordance with Art. 153(4) EPC

(43) Date of publication:
**25.07.2012 Bulletin 2012/30**

(21) Application number: **10816569.7**

(22) Date of filing: **20.01.2010**

(51) Int Cl.:
**H04L 1/06** *(2006.01)*

(86) International application number:
**PCT/CN2010/070264**

(87) International publication number:
**WO 2011/032365 (24.03.2011 Gazette 2011/12)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **18.09.2009 CN 200910170592**

(71) Applicant: **Fujitsu Limited
Kawasaki-shi, Kanagawa 211-8588 (JP)**

(72) Inventors:
• **WANG, Jian
  Beijing 100025 (CN)**

• **TIAN, Jun
  Beijing 100025 (CN)**
• **WU, Jianming
  Beijing 100025 (CN)**
• **ZHANG, Yuantao
  Beijing 100025 (CN)**

(74) Representative: **Stebbing, Timothy Charles
  Haseltine Lake LLP
  300 High Holborn
  London WC1V 7JH (GB)**

(54) **METHOD AND DEVICE FOR GENERATING PRE-CODING MATRIX CODEBOOK**

(57) This invention relates to a method and a device for generating a precoding matrix codebook. The method for generating a precoding matrix codebook used in a multi-antenna communication system comprises: a) determining an initial precoding matrix codebook consisted of L precoding matrixes; b) dividing a channel set into L channel groups being in one-to-one correspondence to the precoding matrix of the initial precoding matrix codebook; c) selecting a precoding matrix which optimally matches the channel group, from the precoding matrix universal set, to form a new precoding matrix codebook; d) judging whether the initial precoding matrix codebook and the new precoding matrix codebook are same; and e) adopting the new precoding matrix codebook as the initial precoding matrix codebook and returning to the step b) to proceed, if the initial precoding matrix codebook and the new precoding matrix codebook are not same; and adopting the new precoding matrix codebook as a precoding matrix codebook to be used in the multi-antenna communication system if the initial precoding matrix codebook and the new precoding matrix codebook are same.

START

ST 102 → determining initial precoding matrix codebook

ST 104 → dividing channel universal set into L channel groups

ST 106 → selecting precoding matrix optimally matching each channel group from precoding matrix universal set

ST 108 → generating new precoding matrix codebook

ST 114 → taking new precoding matrix codebook as initial precoding matrix codebook

ST 110 → whether new precoding matrix codebook being same as initial precoding matrix codebook? — N

ST 112 → taking new precoding matrix codebook as finally generated precoding matrix codebook

END

**FIG.1**

EP 2 479 915 A1

**Description**

Field of the Invention

The present invention generally relates to multi-antenna communication systems, and more particularly, to a method and a device for generating a precoding matrix codebook used in a multi-antenna communication system, as well as to a multi-antenna communication system, a transmitter and a receiver using the method for generating a precoding matrix codebook.

Background of the Related Art

Until recently, wireless communication systems have been developed rapidly. The original second-generation (2G) mobile communication system, namely the Global System for Mobile Communications (GSM), has been incessantly evolving into such technologies as general radio packet service (GPRS) and enhanced data rate GSM evolution (EDGE), thus greatly enhancing data transmission capability of the system. Third-generation (3G) mobile communication systems with higher transmission rates, embodied in such technologies for instance as wideband code division multiple access (WCDMA) and CDMA2000, have also been deployed and started for commercial applications in many countries and regions all over the world. Same time at the development of the cellular communication technology, other wireless access technologies, such as wireless local area network (WLAN) and Worldwide Interoperability for Microwave Access (WiMAX) technologies, have also been rapidly developed. Moreover, such projects as IEEE 802.16m technology, the 3rd Generation Partnership Project Long Term Evolution (3GPP LTE) and the advanced 3rd Generation Partnership Project Long Term Evolution (3GPP LTE_advance) facing towards the fourth-generation (4G) mobile communication systems have also been started and entered the stage of research and development.

The multiple-inputs multiple-outputs multi-antenna communication system can support parallel transmissions of data streams, and can therefore greatly increase the throughput of the system, so it has become the technology to which much attention has been paid in scholarly studies and practical applications. Under general circumstances, parallel data streams in multi-antenna transmission are firstly performed with independent forward error correction coding, and the coded codewords are then mapped to one or more transmission layers. When the codewords are mapped to a plurality of transmission layers, the serial data output from the encoder are serial-to-parallel conversed into corresponding multiple layers. In one transmission, the number of all transmission layers supported by the system is also referred to as the rank of this transmission.

Generally speaking, the number of layers or rank supported by the transmission of a multi-antenna communication system is less than or equal to the number of physical antennas of the multi-antenna communication system. The process of converting data of each layer into data on each physical antenna is called the precoding process of signals. Specifically, the process of converting data of each layer into data on each physical antenna by linear operation is called the linear precoding process of signals. In the currently available wireless communications systems, such as the LTE system and the WiMAX system, it is necessary for the system to design in advance a predetermined number of precoding matrices due to computational complexity and signaling control complexity of the system. A set of the precoding matrices is referred to as a precoding matrix codebook, and the number of precoding matrices is referred to as the size of the precoding matrix codebook. Obviously, both the size of the precoding matrix codebook and the elements of the precoding matrix codebook directly affect such performance measures as the mutual information and the throughput of the system.

In the prior art, the precoding matrix codebook is fixed as part of communication standards. In other words, different wireless communication devices adopting the same communication standard have the same precoding matrix codebook. However, the fixed precoding matrix codebook is not necessarily suitable for a communication device under certain environment, and the communication device cannot generate its own precoding matrix codebook. Therefore, it is a pending problem as how to generate a better precoding matrix codebook from the currently available precoding matrix codebooks.

Likewise, in the absence of a precoding matrix codebook, it is also a problem needing urgent solution now as how to rapidly generate a precoding matrix codebook having high system performance measure.

Reference documents of the present invention are listed below, and herein incorporated as if they were described in detail in the Description of the present application.

    1. European Patent Application Publication: EP1919097A1, entitled "Codebook generator, codebook and method for generating update matrices to be used in a precoding scheme with MIMO transmission";

    2. US Patent Application Publication: US2008080449A1, entitled: "Generalized codebook design method for limited feedback systems";

3. US Patent Application Publication: US2008165876A1, entitled: "APPARATUS FOR GENERATING PRECODING CODEBOOK FOR MIMO SYSTEM AND METHOD USING THE APPARATUS";

4. US Patent Application Publication: US2008292013A1, entitled: "NESTED PRECODING CODEBOOK STRUCTURES FOR MIMO SYSTEMS";

5. US Patent Application Publication: US2008303699A1, entitled: "MIMO wireless precoding system robust to power imbalance";

6. US Patent Application Publication: US2008316910A1, entitled: "Complex vector quantization codebook for use in downlink multi-user MIMO mobile broadcast systems";

7. US Patent Application Publication: US2009006518A1, entitled: "Simple MIMO precoding codebook design for a MIMO wireless communications system";

8. International Patent Application Publication: WO2008086239A1, entitled: "PRECODING CODEBOOK FOR MIMO SYSTEMS";

9. International Patent Application Publication: WO2008097035A1, entitled: "CODEBOOK GENERATING METHOD AND APPARATUS FOR GENERATING A CODEBOOK FOR MULTI-POLARIZED MULTIPLE-INPUT MULTIPLE-OUTPUT (MIMO) SYSTEMS"; and

10. International Patent Application Publication: WO2008137523A1, entitled: "A CODEBOOK METHOD FOR MULTIPLE INPUT MULTIPLE OUTPUT WIRELESS SYSTEM".

Summary of the Invention

An object of the present invention is to provide a method for generating a precoding matrix codebook used in a multi-antenna communication system, the method being capable of generating a new precoding matrix codebook with better system performance measure from an initial precoding matrix codebook.

Another object of the present invention is to provide a device for generating a precoding matrix codebook, the device being capable of generating a new precoding matrix codebook with better system performance measure from an initial precoding matrix codebook.

Yet another object of the present invention is to provide a multi-antenna communication system, a transmitter and a receiver capable of generating precoding matrix.

To achieve the aforementioned and other additional objects, the present application provides the following aspects.

According to one aspect of the present invention, there is provided a method for generating a precoding matrix codebook used in a multi-antenna communication system, comprising:

a) determining an initial precoding matrix codebook consisted of L precoding matrixes, wherein L is an integer larger than one, each precoding matrix of the initial precoding matrix codebook is selected from a precoding matrix universal set generated from the number of physical antennas of the multi-antenna communication system and the number of ranks supported by the multi-antenna communication system and including M precoding matrixes, wherein M is an integer larger than one and L< M;

b) dividing a channel set into L channel groups being in one-to-one correspondence to the precoding matrix of the initial precoding matrix codebook, wherein the channel set is consisted of N channel instances and is capable of reflecting channel statistic characteristics of the multi-antenna communication system, wherein N is an integer larger than one;

c) selecting for each channel group, a precoding matrix which optimally matches the channel group, from the precoding matrix universal set, to form a new precoding matrix codebook;

d) judging whether the initial precoding matrix codebook and the new precoding matrix codebook are same; and

e) adopting the new precoding matrix codebook as the initial precoding matrix codebook and returning to the step b) to proceed, if the initial precoding matrix codebook and the new precoding matrix codebook are not same; and adopting the new precoding matrix codebook as a precoding matrix codebook to be used in the multi-antenna communication system if the initial precoding matrix codebook and the new precoding matrix codebook are same.

According to another aspect of the present invention, there is provided a device for generating a precoding matrix codebook used in a multi-antenna communication system, comprising:

an initial precoding matrix codebook determination unit for determining an initial precoding matrix codebook consisted of L precoding matrixes, wherein L is an integer larger than one, each precoding matrix of the initial precoding matrix codebook is selected from a precoding matrix universal set generated from the number of physical antennas of the multi-antenna communication system and the number of ranks supported by the multi-antenna communication system and including M precoding matrixes, wherein M is an integer larger than one and L< M;

a channel grouping unit for dividing a channel set into L channel groups being in one-to-one correspondence to the precoding matrix of the initial precoding matrix codebook, wherein the channel set is consisted of N channel instances and is capable of reflecting channel statistic characteristics of the multi-antenna communication system, and wherein N is an integer larger than one;

a new precoding matrix codebook generation unit for selecting a precoding matrix which optimally matches the channel group from the precoding matrix universal set, to form a new precoding matrix codebook;

a control unit for judging whether the initial precoding matrix codebook and the new precoding matrix codebook are same; for outputting the new precoding matrix codebook as a precoding matrix codebook to be used in the multi-antenna communication system, if the initial precoding matrix codebook and the new precoding matrix codebook are same; while adopting the new precoding matrix codebook as the initial precoding matrix codebook, controlling the channel grouping unit to re-divide the channel set, and controlling the new precoding matrix codebook generation unit to regenerate a new precoding matrix codebook, until the new precoding matrix codebook and the initial precoding matrix codebook are same, if the initial precoding matrix codebook and the new precoding matrix codebook are not same.

According to yet another aspect of the present invention, there is provided a multi-antenna communication system which generates a precoding matrix codebook by using the aforesaid method.

According to still another aspect of the present invention, there is provided a transmitter in a multi-antenna communication system, which transmitter generates a precoding matrix codebook by using the aforesaid method.

According to yet still another aspect of the present invention, there is provided a receiver in a multi-antenna communication system, which receiver generates a precoding matrix codebook by using the aforesaid method, and transmits the generated precoding matrix codebook to a transmitter, so that the precoding matrix codebook is used in communication therebetween.

According to still yet another aspect of the present invention, there is provided a storage medium containing a machine-readable program code, when executed in a multi-antenna communication system or an information processing system, the program code enables the multi-antenna communication system or the information processing system to implement the aforementioned method.

According to a further aspect of the present invention, there is provided a program product containing a machine-executable command, when executed in a multi-antenna communication system or an information processing system, the command enables the multi-antenna communication system or the information processing system to implement the aforementioned method.

The method and device according to the present invention may generate a new precoding matrix codebook with better system performance measure from an initial precoding matrix codebook, to thereby enhance the system performance measure.

Preferred embodiments of the present invention are described in greater detail below with reference to the accompanying drawings, whereby these and other advantages of the present invention will become more apparent.

Explanations of the Accompanying Drawings

Fig. 1 is a flowchart illustrating the method for generating a precoding matrix codebook according to the embodiments of the present invention;

Fig. 2 is a flowchart illustrating the method for dividing a channel set into L channel groups according to the embodiments of the present invention;

Fig. 3 illustrates a Table of Relationship between signal-to-noise ratio (SNR) and mutual information (MI) during QPSK modulation and using Max-Log-MAP decoding method;

Fig. 4 exemplarily illustrates a Table of Relationship between signal-to-noise ratio (SNR) and mutual information (MI) during QAM16 modulation and using Max-Log-MAP decoding method;

Fig. 5 exemplarily illustrates a Table of Relationship between signal-to-noise ratio (SNR) and mutual information (MI) during QAM64 modulation and using Max-Log-MAP decoding method;

Fig. 6 is a diagram exemplarily illustrating link-level error block rate performance under each code modulating scheme;

Fig. 7 is a diagram exemplarily illustrating link-level throughput performance under each code modulating scheme; and

Fig. 8 is a block diagram illustrating an exemplary device for generating a precoding matrix codebook according to the present invention.

Specific Embodiments for Carrying Out the Invention

Exemplary embodiments of the present invention are described below with reference to the accompanying drawings. For the sakes of clarity and brevity, the Description does not describe all features of actual embodiments. However, as should be aware, many decisions unique to any actual embodiment must be made during the process of developing the embodiment, so as to facilitate achievement of the specific objects of the developer - for instance, conformity with those restricting conditions that are associated with the system and services -, and these restricting conditions may as well differ due to difference in the embodiments. Moreover, as should also be aware, though the developing work may be very complicated and time consuming, it is merely a routine task for persons skilled in the art who benefit from disclosure of the present invention.

Additionally, as should also be pointed out, in order to avoid obfuscation of the present invention due to unnecessary details, in the drawings are only shown structures of devices and/or processing steps that are closely related to the solutions of the present invention, while are omitted other details not directly related to the present invention.

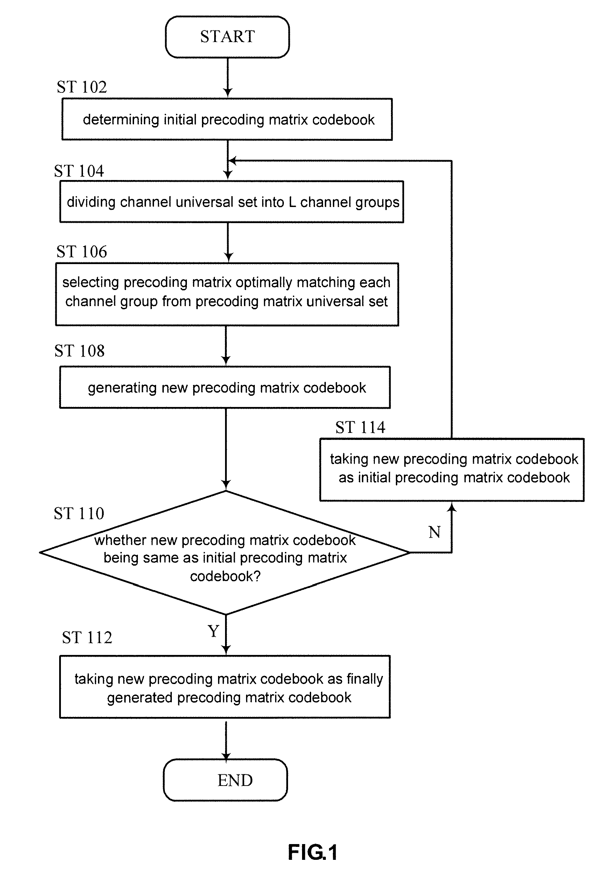

Fig. 1 is an exemplary flowchart illustrating the method for generating a precoding matrix codebook for use in a multi-antenna communication system according to the embodiments of the present invention.

In step ST102, an initial precoding matrix codebook Q consisting of L precoding matrices $Q_l$ is firstly determined, where $1 \leq l \leq L$, and L is an integer greater than 1 and usually referred to as the size of the initial precoding matrix codebook Q. Each precoding matrix in the initial precoding matrix codebook Q may be randomly selected from a precoding matrix universal set or an existing precoding matrix codebook of the multi-antenna communication system.

Although it is not the inventive essential of the present invention as how to generate a precoding matrix universal set of a multi-antenna communication system, firstly and briefly introduced below is how to generate the precoding matrix universal set in order to facilitate comprehension of the present invention.

The precoding matrix universal set of a multi-antenna communication system is related to the number of physical antennas in the multi-antenna communication system and the number of transmission layers supported by the multi-antenna communication system. It is presumed in the present invention that a precoding matrix universal set P includes M precoding matrices Pm, where $1 \leq m \leq M$ and M>L.

A four-antenna communication system (i.e., the number of physical antennas in the multi-antenna communication system is 4) is taken for example below to describe how to generate the precoding matrix universal set P.

(1) Under circumstance in which the number of transmission layer supported by the multi-antenna communication system is 1:

For instance, four precoding matrices can be obtained from the following discrete Fourier Transformation (DFT) matrix (1), where each precoding matrix corresponds to one column of the DFT matrix,

$$\begin{bmatrix} 1 & 1 & 1 & 1 \\ 1 & -j & -1 & j \\ 1 & -1 & 1 & -1 \\ 1 & j & -1 & -j \end{bmatrix} \qquad (1)$$

Alternatively, four precoding matrices can be obtained from the following Hadamard matrix (2), where each precoding matrix corresponds to one column of the Hadamard matrix,

$$\begin{bmatrix} 1 & 1 & 1 & 1 \\ 1 & -1 & 1 & -1 \\ 1 & 1 & -1 & -1 \\ 1 & -1 & -1 & 1 \end{bmatrix} \qquad (2)$$

More generally, there may be the following precoding matrix form [1;x;y;z], where x,y,z are QPSK (quadrature phase shift keying) constellation points, or 8PSK (8 phase shift keying) constellation points, or 16PSK constellation points, or higher-dimensional PSK constellation points.

When x,y,z are QPSK constellation points, the number of all obtained precoding matrices is $4\times4\times4=64$; when x,y,z are 8PSK constellation points, the number of all obtained precoding matrices are $8\times8\times8=512$; and when x,y,z are 16PSK constellation points, the number of all obtained precoding matrics is $16\times16\times16=4096$.

Of course, there may also be other forms of precoding matrices where the number of layers is 1.

According to the requirements of the multi-antenna communication system, one, several, or entire forms of the aforementioned precoding matrices, or a power-normalized matrix of these precoding matrices may be taken as the precoding matrix universal set P where the number of physical antennas is 4 and the number of layers is 1.

(2) Under circumstance in which the number of transmission layers supported by the multi-antenna communication system is 2:

For instance, six precoding matrices can be obtained from the aforementioned DFT matrix (1), where each precoding matrix corresponds to two columns selected from the DFT matrix.

Six precoding matrices can be obtained from the aforementioned Hadamard matrix (2), where each precoding matrix corresponds to two columns selected from the Hadamard matrix (2).

More generally, there can be the following precoding matrix form p=[1 1;x1 x2;y1 y2;z1 z2], wherein x1 x2 y1 y2 z1 z2 are QPSK constellation points, or 8PSK constellation points, or 16PSK constellation points, or higher-dimensional PSK constellation points; and p is a unitary matrix, namely $p^H\times p=\alpha I$, where $\alpha$ is scalar quantity.

When x1 x2 y1 y2 z1 z2 are QPSK constellation points, the number of all obtained precoding matrices are 288; when x1 x2 y1 y2 z1 z2 are 8PSK constellation points, the number of all obtained precoding matrices are 5376; and when x1 x2 y1 y2 z1 z2 are 16PSK constellation points, the number of all obtained precoding matrices are 92160.

Of course, there may also be other forms of precoding matrix universal sets where the number of layers is 2.

According to the requirements of the multi-antenna communication system, one, several, or entire forms of the aforementioned precoding matrices, or a power-normalized matrix of these precoding matrices may be taken as the precoding matrix universal set P where the number of layers is 2.

Circumstances in which the numbers of layers are 3 and 4 are similar to the aforementioned processes, and are not repetitively described here.

To persons skilled in the art, for other antenna configurations, such as a two-antenna communication system having two physical antennas, or an eight-antenna communication system having eight physical antennas or a multi-antenna communication system having even more physical antennas, corresponding precoding matrix universal sets P can be obtained by methods similar to the method of the aforementioned four-antenna communication system having four physical antennas.

The initial precoding matrix codebook Q can be determined by randomly selecting L precoding matrices from the generated precoding matrix universal set P. Additionally, an existing precoding matrix codebook used in the multi-antenna communication system can be selected as the initial precoding matrix codebook Q.

As regards the size L of the initial precoding matrix codebook Q, it is a process of global optimization in the multi-antenna communication system as how to determine the size L of the initial precoding matrix codebook Q. How to determine the size of the initial precoding matrix codebook Q is not the inventive essential of the present invention, so it is possible for persons skilled in the art to utilize any existing or to-be-developed method to determine the size of the initial precoding matrix codebook Q.

In the following description of the present invention, an initial precoding matrix codebook Q having a size as L=16 is taken as an example. As should be aware to persons skilled in the art, the present invention is applicable to initial precoding matrix codebooks having any random sizes. For instance, in the LTE-A system, during uplink transmission, the size of the precoding matrix codebook is usually 16 when the number of transmission layer is 1, the size of the precoding matrix codebook is usually 16 when the number of transmission layers is 2, and the size of the precoding matrix codebook is usually 20 when the number of transmission layers is 3.

Now returning to Fig. 1, after the initial precoding matrix codebook Q is determined in step ST102, the process proceeds to Step ST104, in which a channel universal set H=[$H_1,H_2,H_3,...,H_N$] is divided into L channel groups corresponding to the precoding matrices in the initial precoding matrix codebook Q on a one-by-one basis. The channel set H is a channel set consisting of N channel instances $H_n$ (also referred to as channels) and capable of reflecting channel statistic characteristics of the multi-antenna communication system, $1 \leq n \leq N$, and N is an integer greater than 1.

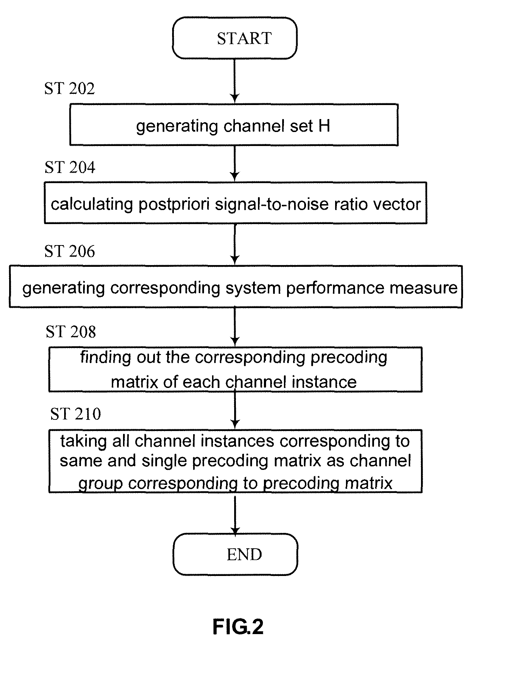

Step ST104 may be realized by various methods. As an example, it is explained below with reference to Fig. 2 as how to divide the channel universal set H=[$H_1,H_2,H_3,...,H_N$] into L channel groups corresponding to the precoding matrices in the initial precoding matrix codebook Q on a one-by-one basis.

In Step ST202, the channel set H is firstly generated. A new channel set H before each division is invariably generate to cause the new precoding matrix codebook to be generated better to the multi-antenna communication system. Of course, it is also possible to use a fixed channel set H during the entire process of generating the precoding matrix codebook, and using the fixed channel set H can increase the speed of generating the new precoding matrix codebook. Of course, it should be understood to persons skilled in the art, it is also possible to even use the same channel set H each time a precoding matrix codebook is generated.

More specifically, the channel set H is randomly generated according to design conditions (such as independent Rayleigh fading channel). At the same time, due to the randomness of the channel, the number N of elements of the generated channel set H should be enough large to reflect the statistic characteristics of the channel - for instance, N being approximately $1 \times 10^5$.

The channel universal set H is described in greater detail below taking a multi-antenna communication system with four antennas transmitting and four antennas receiving as an example.

For instance, as regards an independent Rayleigh fading channel, the channel instance $H_n$ generated each time, where $1 \leq n \leq N$, is a $4 \times 4$ matrix, and each element of the matrix is a signal abiding by complex Gaussian distribution and irrelevant to one another.

For instance, if the correlation between each transmitting antenna and each receiving antenna is taken into consideration, suppose the correlation matrix be R, the channel instance generated each time can then be represented as $H_n$=unvec ($R^{1/2} \times$ vec (h)), where h is a randomly generated Rayleigh fading channel instance, vec (h) sequentially arranges each column vector of the matrix h into a one-dimensional column vector, and unvec operation is an inverse operation of vec operation.

Of course, there may be channels of other forms and other statistic characteristics, and all of these have their corresponding channel generating methods, which are not redundantly described here.

Subsequently in Step ST204, with respect to each channel instance $H_n$ ($1 \leq n \leq N$) in the channel set H and each precoding matrix $Q_l$ ($1 \leq l \leq L$) in the initial precoding matrix codebook Q, a post-priori signal-to-noise ratio vector $SNR_{post,n,l}$ is calculated when the multi-antenna communication system uses the precoding matrix under this channel instance. In other words, with respect to each channel instance $H_n$ ($1 \leq n \leq N$) of the channel set H, the post-priori signal-to-noise ratio vector $SNR_{post,n,l}$ of the multi-antenna communication system, to which each precoding matrix $Q_l$ ($1 \leq l \leq L$) in the initial precoding matrix codebook Q corresponds, is calculated. Towards this end, when the channel set H is divided into groups for the first time, it is necessary to determine the signal-to-noise ratio (SNR) of the multi-antenna communication system. How to determine the signal-to-noise ratio (SNR) of the multi-antenna communication system is not the inventive essential of the present invention. To persons skilled in the art, it is possible to determine the signal-to-noise ratio (SNR) of the multi-antenna communication system by using any known, self-interested, or to-be-later-published method upon practical demand. In the present invention, suppose the normalized noise power of the multi-antenna communication system be $\sigma^2$. Several exemplary methods for calculating the post-priori signal-to-noise ratio vector $SNR_{post,n,l}$ are given below.

For instance, with respect to the channel instance $H_n$ ($1 \leq n \leq N$) and the precoding matrix $Q_l$ ($1 \leq l \leq L$), when MMSE (the minimum mean squared error) algorithm is used, the post-priori signal-to-noise ratio vector $SNR_{post,n,l}$ is as follows:

$$SNR_{post,n,l} = 1./ diag(\sigma^2 [\sigma^2 I + (H_n Q_l)^H (H_n Q_l)]^{-1}) \tag{3}$$

when the zero forcing (ZF) algorithm is used, the post-priori signal-to-noise ratio vector $SNR_{post,n,l}$ is as follows:

$$SNR_{post,n,l} = 1./ diag(\sigma^2 [(H_n Q_l)^H (H_n Q_l)]^{-1}) \tag{4}$$

In the above algorithms, Diag is a diagonal array function, and $SNR_{post,n,l}$ is a column vector whose dimension is equal to the number of columns (namely the number of ranks of the precoding matrix) of the precoding matrix $Q_l$.

Of course, there are also other decoding methods, such as the maximum likelihood decoding. Any decoding method will correspond to the decoded post-priori signal-to-noise ratio vector $SNR_{post,n,l}$.

All post-priori signal-to-noise ratio vectors may be arranged into a matrix of L rows and N columns, of which each row represents a post-priori signal-to-noise ratio vector, corresponding to one precoding matrix $Q_l$ of the initial precoding matrix codebook Q, of the multi-antenna communication system under each channel instance, and each column represents a post-priori signal-to-noise ratio vector, corresponding to one channel instance, of the multi-antenna communication system when each precoding matrix of the initial precoding matrix codebook Q is used. The matrix has altogether L×N elements.

It is of course not absolutely necessary to arrange the post-priori signal-to-noise ratio vectors into a matrix, as it is also possible to arrange the vectors in any proper mode, into a one-dimensional array, for instance. In such a one-dimensional array, the post-priori signal-to-noise ratio vector of each channel instance corresponding to the first precoding matrix $Q_1$ in the initial precoding matrix codebook Q is firstly arranged, the post-priori signal-to-noise ratio vector of each channel instance corresponding to the second precoding matrix $Q_2$ in the initial precoding matrix codebook Q is subsequently arranged, and so on so forth, until the post-priori signal-to-noise ratio vector of each channel instance corresponding to the L precoding matrix $Q_L$ in the initial precoding matrix codebook Q is finally arranged.

After the post-priori signal-to-noise ratio vectors have been calculated in Step ST204, in step ST206, corresponding system performance measures, such as system throughput, mutual information, and error block rate etc., are generated according to the obtained post-priori signal-to-noise ratio vectors. Different system performance measures (such as throughput, mutual information, and error block rate etc.) may be calculated according to different definitions or different algorithms.

As examples, provided below are several methods by which system performance measures are obtained from post-priori signal-to-noise ratio vectors.

For instance, use of a Shannon formula can obtain system throughput represented by Shannon limit:

$$C = \log_2(1 + SNR) \tag{5}$$

For further instance, when the multi-antenna communication system uses QAM (quadrature amplitude modulation) and the maximum likelihood decoding method, mutual information corresponding to the modulation scheme may be obtained by a method of calculating numerical values or by a manner of searching a lookup table.

For further instance, when the multi-antenna communication system uses QAM or QPSK modulation and the Max-Log-Map decoding method, the mutual information of modulation can be obtained by a method of calculating numerical values or by a method of searching a lookup table.

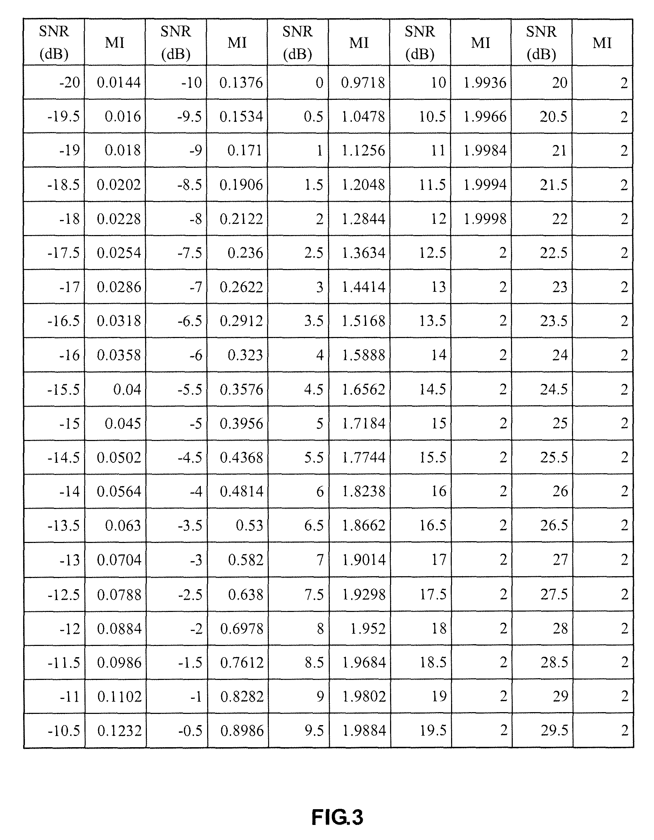

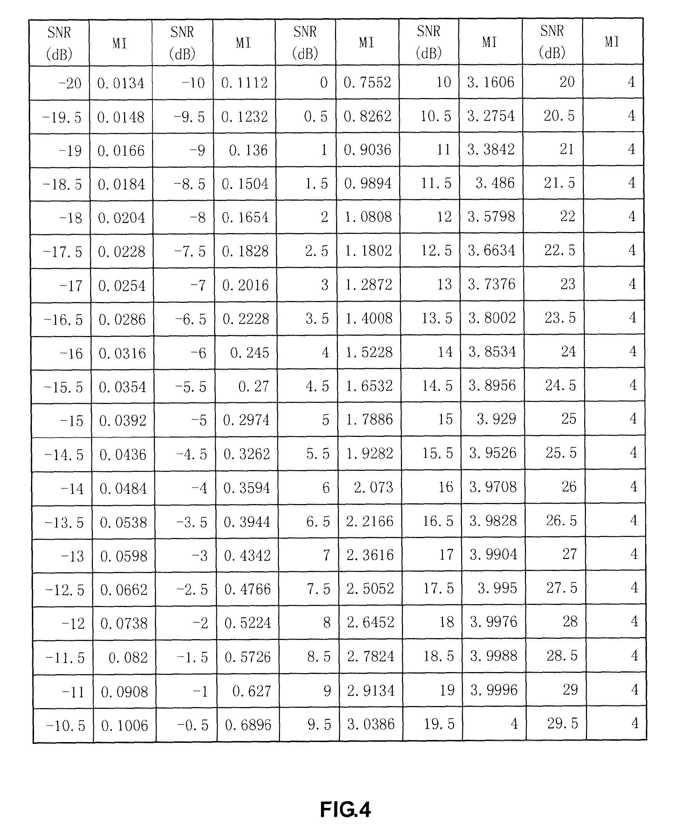

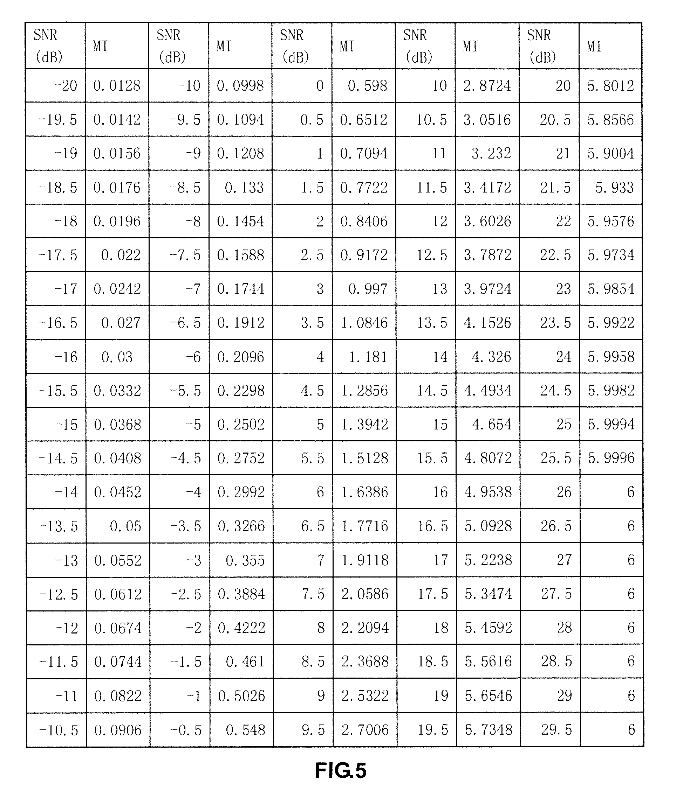

Fig. 3 exemplarily illustrates a Table of Relationship between SNR and mutual information (MI) during QPSK modulation and using Max-Log-MAP decoding method, and Figs. 4 and 5 respectively exemplarily illustrate a Table of Relationship between SNR and MI during QAM16 and QAM64 modulations and using Max-Log-MAP decoding method.

For further instance, under the circumstance in which link-level error block rate (BLER) performance of each code modulating scheme (MCS) of the system has been known, the link-level error block rate can be used directly, but the link-level error block rate performance of each code modulating scheme (MCS) of the system can also be converted into link-level throughput performance of the code modulating scheme (MCS) of the system, so as to obtain the throughput of the system through the method of searching a lookup table.

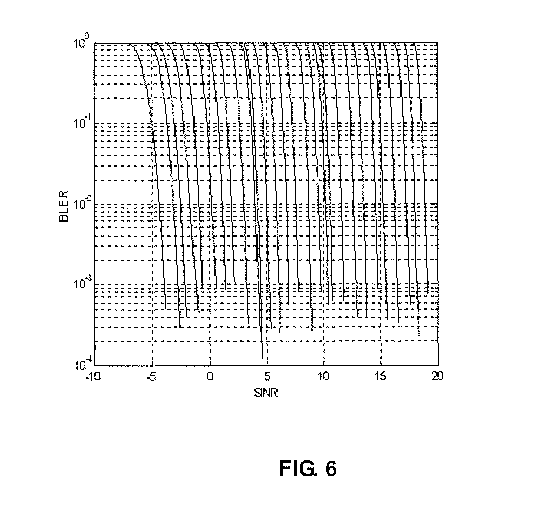

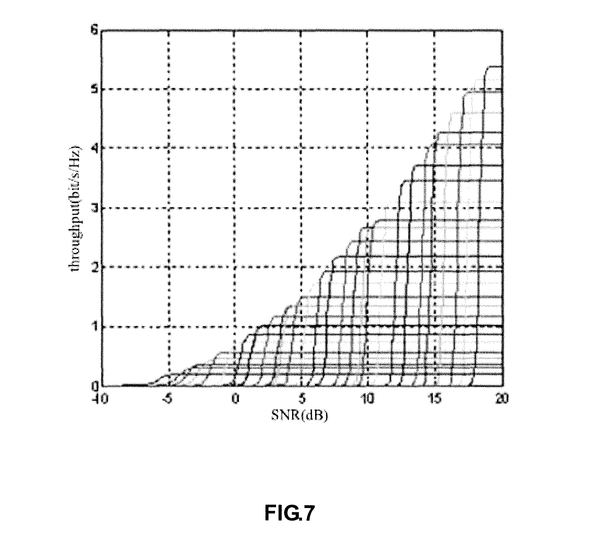

Fig. 6 is a diagram exemplarily illustrating link-level error block rate performance under each code modulating scheme, while Fig. 7 is a diagram exemplarily illustrating link-level throughput performance under each code modulating scheme.

Of course, there are also other mapping or calculating methods that map or calculate the post-priori signal-to-noise ratio vectors into/as such system performance measures as system throughput, mutual information or error block rate, but these are not redundantly described here.

After the corresponding system performance measure has been generated in step ST206, the corresponding precoding matrix of each channel instance is found out in step ST208. Specifically, for each channel instance of the channel set H, the precoding matrix in the initial precoding matrix codebook Q with the best system performance measure is selected as the corresponding precoding matrix of this channel instance.

More specifically, where the system performance measure is throughput, after the system throughputs corresponding to each channel instance $H_n$ (1≤n≤N) and each precoding matrix $Q_l$ (1≤l≤L) have been obtained, all system throughputs are arranged into a matrix TQ of L rows and N columns, of which each row represents one of the precoding matrix and each column represents one of the channel instance. The matrix has altogether L×N elements.

Elements in the matrix TQ are expressed as TQ($l$,n), (1≤l≤L , 1≤n≤N), where TQ ($l$,n) represents the throughput of the system when the $l^{th}$ precoding matrix is used, under the $n^{th}$ channel instance.

The maximum value of throughput for each column of the matrix TQ can be selected, and record the coordinate thereof as L (n)=$l$, ($1 \leq l \leq L$, $1 \leq n \leq N$). Physical meaning of L (n)=$l$ expresses that, for the $n^{th}$ channel instance $H_n$, the $l^{th}$ precoding matrix $Q_l$($1 \leq l \leq L$) in the initial precoding matrix codebook Q makes the throughput of the system maximum. In other words, one precoding matrix of the initial precoding matrix codebook Q corresponding to the maximum value of the throughput is a precoding matrix that optimally matches the channel instance (namely the corresponding precoding matrix of the channel instance).

Of course, for other performance measures such as mutual information and error block rate, it is also possible to select the precoding matrix in the initial precoding matrix codebook Q with the best system performance measure as the corresponding precoding matrix of the channel instance according to methods similar to the aforementioned method. The difference lies merely in that, insofar as the error block rate is concerned, the precoding matrix with the best system performance measure is a precoding matrix having the smallest error block rate; whereas insofar as the mutual information is concerned, like the case of throughput, the precoding matrix with the best system performance measure is a precoding matrix having the greatest mutual information.

Usually, since the number of channel instances, namely the size N of the channel set H, is by far greater than the size L of the initial precoding matrix codebook Q, each channel instance exclusively corresponds to one precoding matrix, while each precoding matrix corresponds to a series of channel instances.

Then in step ST210, all channel instances corresponding to the same and one precoding matrix are grouped as a channel group corresponding to this precoding matrix, whereby the channel set H=[$H_1$,$H_2$,$H_3$,...,$H_N$] is divided into L channel groups, represented as $R_1$, $R_2$,... $R_L$.

Now returning to Fig. 1, after the channel set H has been divided into L channel groups in step ST104, in step ST106, the precoding matrices each optimally matching one of the channel groups are selected from the precoding matrix universal set P to form a new precoding matrix codebook Q'. For each channel group, the most matching precoding matrix can be selected by the following steps:

(1) generating, with respect to each channel instance $H_n$ ($1 \leq n \leq N$) in the channel group H and each precoding matrix $P_m$ ($1 \leq m \leq M$) in the precoding matrix universal set P, the post-priori signal-to-noise ratio vector $SNR_{post,n,m}$ of the multi-antenna communication system when the precoding matrix $P_m$ is used under the channel instance $H_n$, and generating the corresponding system performance measure according to the calculated post-priori signal-to-noise ratio vector;

(2) summating, with respect to each precoding matrix $P_m$ in the precoding matrix universal set P, the system performance measures of the multi-antenna communication system under all channel instances in the channel group, and taking the resultant summation as the total system performance measure of the precoding matrix; and

(3) selecting the precoding matrix with the best total system performance measure in the precoding matrix universal set P as the precoding matrix that optimally matches the channel group.

Explanation is made below with an example in which the system performance measure is throughput. As should be comprehensible to persons skilled in the art, it is also possible to use other system performance measures to select the precoding matrix that optimally matches each channel.

Each channel group is processed as described below. A channel group $R_l$ ($1 \leq l \leq L$) is taken for example.

Suppose the channel group $R_l$ contain S channel instances. For each precoding matrix $P_m$ ($1 \leq m \leq M$) in the precoding matrix universal set P, the throughput corresponding to each $R_{l,s}$ ($1 \leq s \leq S$) can be calculated according to the methods in steps ST204 and ST206, to obtain a throughput matrix TP (m, s). Of course, as should be understood by persons skilled in the art, it is also possible to calculate the throughput corresponding to each channel instance by using methods different from those in steps ST204 and ST206, and it is also possible to represent the throughput in other forms, such as a one-dimensional array, rather than the matrix.

The throughputs in each row of the throughput matrix TP are summated, and the resultant throughput summation is taken as the total throughput of the precoding matrix to which the row correspond. Subsequently, the maximum value of the total throughputs of all precoding matrices is extracted to obtain a number of row t in which the maximum value locates, and to hence obtain a precoding matrix $P_t$. The precoding matrix $P_t$ is a precoding matrix that optimally matches the channel group $R_l$, and it is represented as $Q'_l$.

Each channel group is processed as described above, to thereby obtain precoding matrices $Q'_1$, $Q'_2$,..., $Q'_L$ that optimally matches L channel groups.

Of course, for other performance measures such as mutual information and error block rate, it is also possible to select the precoding matrix with the best total system performance measure from the precoding matrix universal set P as the precoding matrix that optimally matches the channel group according to methods similar to the aforementioned method. The difference lies merely in that, insofar as the error block rate is concerned, the precoding matrix with the best system performance measure is a precoding matrix having the smallest error block rate - in other words when error block rate is used as the evaluation measure, the precoding matrix that optimally matches the channel group is a precoding matrix having the smallest error block rate. However, insofar as the mutual information is concerned, like the case of throughput, the precoding matrix with the best system performance measure is a precoding matrix having the greatest mutual information. As comprehensible, for any determined system performance measure, it is determinable by a person skilled in the art as what a system performance measure is the best; likewise, it is also determinable as what conditions should be satisfied by the system performance measure of a precoding matrix to be an optimally matched precoding matrix.

After the precoding matrices $Q'_1$, $Q'_2$,..., $Q'_L$ each optimally matching one channel group have been selected, the precoding matrices $Q'_1$, $Q'_2$,..., $Q'_L$ are taken as a new precoding matrix codebook Q' in step ST108. Then it is judged in step ST110 whether the new precoding matrix codebook Q' is identical with the initial precoding matrix codebook Q, namely to judge whether evolution occurs. If the two are different, the process proceeds to step ST114, in which the new precoding matrix codebook Q' is taken as the initial precoding matrix codebook Q to be returned to step ST104 for further processing until the resultant new precoding matrix codebook Q' is identical with the initial precoding matrix codebook Q. If the two are identical, namely no evolution occurs any more, the process proceeds to step ST112, in which the new precoding matrix codebook Q' is taken as the finally generated precoding matrix codebook to be used in the multi-antenna communication system, and then the process ends. The system performance measure of the new precoding matrix codebook Q' has already been the same as the system performance measure of the initial precoding matrix codebook Q, indicating that a precoding matrix codebook obtained by further evolution will not be enhanced in system performance measure.

According to the present invention, the new precoding matrix codebook Q' can be generated from the initial precoding matrix codebook Q by the mode of "evolution" (or iteration), and the process is repetitively carried out until the new precoding matrix codebook Q' does not change or does not evolve, to improve the precoding matrix codebook used in the multi-antenna communication system, and to thereby improve such performances of the multi-antenna communication system as throughput, error block rate and mutual information etc..

An example is provided below in which a precoding matrix codebook having a length of L=16 is finally obtained by the method according to the present invention, when QPSK constellation points are used in a four-antenna communication system to form the precoding matrix universal set P.

Table 1 shows the precoding matrix universal set P when the number of transmission layers (namely number of ranks) supported by the multi-antenna communication system is 1. The numerals in the blackened frames in Table 1 indicate the numbers of the precoding matrices, while the numerals in the following four rows indicate the elements of the precoding matrices that correspond to the above number. For instance, the precoding matrix with the number as 1 is

$$\begin{bmatrix} 1 \\ 1 \\ 1 \\ 1 \end{bmatrix}.$$

Table 1

| 1 | 2 | 3 | 4 |
|---|---|---|---|
| 1 | 1 | 1 | 1 |
| 1 | 1i | -1 | -1i |
| 1 | 1 | 1 | 1 |
| 1 | 1 | 1 | 1 |

| 5 | 6 | 7 | 8 | 9 | 10 | 11 | 12 | 13 | 14 | 15 | 16 |
|---|---|---|---|---|----|----|----|----|----|----|----|
| 1 | 1 | 1 | 1 | 1 | 1  | 1  | 1  | 1  | 1  | 1  | 1  |
| 1 | 1i | -1 | -1i | 1 | 1i | -1 | -1i | 1 | 1i | -1 | -1i |

(continued)

| 5 | 6 | 7 | 8 | 9 | 10 | 11 | 12 | 13 | 14 | 15 | 16 |
|---|---|---|---|---|---|---|---|---|---|---|---|
| 1i | 1i | 1i | 1i | -1 | -1 | -1 | -1 | -1i | -1i | -1i | -1i |
| 1 | 1 | 1 | 1 | 1 | 1 | 1 | 1 | 1 | 1 | 1 | 1 |

| 17 | 18 | 19 | 20 | 21 | 22 | 23 | 24 | 25 | 26 | 27 | 28 |
|---|---|---|---|---|---|---|---|---|---|---|---|
| 1 | 1 | 1 | 1 | 1 | 1 | 1 | 1 | 1 | 1 | 1 | 1 |
| 1 | 1i | -1 | -1i | 1 | 1i | -1 | -1i | 1 | 1i | -1 | -1i |
| 1 | 1 | 1 | 1 | 1i | 1i | 1i | 1i | -1 | -1 | -1 | -1 |
| 1i | 1i | 1i | 1i | 1i | 1i | 1i | 1i | 1i | 1i | 1i | 1i |

| 29 | 30 | 31 | 32 | 33 | 34 | 35 | 36 | 37 | 38 | 39 | 40 |
|---|---|---|---|---|---|---|---|---|---|---|---|
| 1 | 1 | 1 | 1 | 1 | 1 | 1 | 1 | 1 | 1 | 1 | 1 |
| 1 | 1i | -1 | -1i | 1 | 1i | -1 | -1i | 1 | 1i | -1 | -1i |
| -1i | -1i | -1i | -1i | 1 | 1 | 1 | 1 | 1i | 1i | 1i | 1i |
| 1i | 1i | 1i | 1i | -1 | -1 | -1 | -1 | -1 | -1 | -1 | -1 |

| 41 | 42 | 43 | 44 | 45 | 46 | 47 | 48 | 49 | 50 | 51 | 52 |
|---|---|---|---|---|---|---|---|---|---|---|---|
| 1 | 1 | 1 | | 1 | 1 | 1 | 1 | 1 | 1 | 1 | 1 |
| 1 | 1i | -1 | -1i | 1 | 1i | -1 | -1i | 1 | 1i | -1 | -1i |
| -1 | -1 | -1 | -1 | -1i | -1i | -1i | -1i | 1 | 1 | 1 | 1 |
| -1 | -1 | -1 | -1 | -1 | -1 | -1 | -1 | -1i | -1i | -1i | -1i |

| 53 | 54 | 55 | 56 | 57 | 58 | 59 | 60 | 61 | 62 | 63 | 64 |
|---|---|---|---|---|---|---|---|---|---|---|---|
| 1 | 1 | 1 | 1 | 1 | 1 | 1 | 1 | 1 | 1 | 1 | 1 |
| 1 | 1i | -1 | -1i | 1 | 1i | -1 | -1i | 1 | 1i | -1 | -1i |
| 1i | 1i | 1i | 1i | -1 | -1 | -1 | -1 | -1i | -1i | -1i | -1i |
| -1i | -1i | -1i | -1i | -1i | -1i | -1i | -1i | -1i | -1i | -1i | -1i |

Numbers of the precoding matrices in the precoding matrix codebook finally obtained according to the method of the present invention are:
[33 21 9 61 18 6 58 46 3 55 43 31 52 40 28 16].

Table 2 shows the precoding matrix universal set P when the number of transmission layers (namely number of ranks) supported by the multi-antenna communication system is 2. Like Table 1, the numerals in the blackened frames in Table 2 indicate the numbers of the precoding matrices, while the numerals in the four rows of the following two columns indicate the elements of the precoding matrices that correspond to the above number.

Table 2

| 1 | | 2 | | 3 | | 4 | | 5 | | 6 | |
|---|---|---|---|---|---|---|---|---|---|---|---|
| 1 | 0 | 1 | 0 | 1 | 0 | 1 | 0 | 1 | 0 | 1 | 0 |
| 1 | 0 | 1 | 0 | 1 | 0 | 1 | 0 | i | 0 | i | 0 |
| 0 | 1 | 0 | 1 | 0 | 1 | 0 | 1 | 0 | 1 | 0 | 1 |
| 0 | 1 | 0 | i | 0 | -1 | 0 | -1i | 0 | 1 | 0 | i |
| 7 | | 8 | | 9 | | 10 | | 11 | | 12 | |
| 1 | 0 | 1 | 0 | 1 | 0 | 1 | 0 | 1 | 0 | 1 | 0 |
| i | 0 | i | 0 | -1 | 0 | -1 | 0 | -1 | 0 | -1 | 0 |

(continued)

| 7 | | 8 | | 9 | | 10 | | 11 | | 12 | |
|---|---|---|---|---|---|---|---|---|---|---|---|
| 0 | 1 | 0 | 1 | 0 | 1 | 0 | 1 | 0 | 1 | 0 | 1 |
| 0 | -1 | 0 | -1i | 0 | 1 | 0 | i | 0 | -1 | 0 | -1i |

| 13 | | 14 | | 15 | | 16 | | 17 | | 18 | |
|---|---|---|---|---|---|---|---|---|---|---|---|
| 1 | 0 | 1 | 0 | 1 | 0 | 1 | 0 | 1 | 0 | 1 | 0 |
| -1i | 0 | -1i | 0 | -1i | 0 | -1i | 0 | 0 | 1 | 0 | 1 |
| 0 | 1 | 0 | 1 | 0 | 1 | 0 | 1 | 1 | 0 | 1 | 0 |
| 0 | 1 | 0 | i | 0 | -1 | 0 | -1i | 0 | 1 | 0 | i |

| 19 | | 20 | | 21 | | 22 | | 23 | | 24 | |
|---|---|---|---|---|---|---|---|---|---|---|---|
| 1 | 0 | 1 | 0 | 1 | 0 | 1 | 0 | 1 | 0 | 1 | 0 |
| 0 | 1 | 0 | 1 | 0 | 1 | 0 | 1 | 0 | 1 | 0 | 1 |
| 1 | 0 | 1 | 0 | i | 0 | I | 0 | i | 0 | i | 0 |
| 0 | -1 | 0 | -1i | 0 | 1 | 0 | i | 0 | -1 | 0 | -1i |

| 25 | | 26 | | 27 | | 28 | | 29 | | 30 | |
|---|---|---|---|---|---|---|---|---|---|---|---|
| 1 | 0 | 1 | 0 | 1 | 0 | 1 | 0 | 1 | 0 | 1 | 0 |
| 0 | 1 | 0 | 1 | 0 | 1 | 0 | 1 | 0 | 1 | 0 | 1 |
| -1 | 0 | -1 | 0 | -1 | 0 | -1 | 0 | -1i | 0 | -1i | 0 |
| 0 | 1 | 0 | i | 0 | -1 | 0 | -1i | 0 | 1 | 0 | i |

| 31 | | 32 | | 33 | | 34 | | 35 | | 36 | |
|---|---|---|---|---|---|---|---|---|---|---|---|
| 1 | 0 | 1 | 0 | 1 | 0 | 1 | 0 | 1 | 0 | 1 | 0 |
| 0 | 1 | 0 | 1 | 0 | 1 | 0 | 1 | 0 | 1 | 0 | 1 |
| -1i | 0 | -1i | 0 | 0 | 1 | 0 | i | 0 | -1 | 0 | -1i |
| 0 | -1 | 0 | -1i | 1 | 0 | 1 | 0 | 1 | 0 | 1 | 0 |

| 37 | | 38 | | 39 | | 40 | | 41 | | 42 | |
|---|---|---|---|---|---|---|---|---|---|---|---|
| 1 | 0 | 1 | 0 | 1 | 0 | 1 | 0 | 1 | 0 | 1 | 0 |
| 0 | 1 | 0 | 1 | 0 | 1 | 0 | 1 | 0 | 1 | 0 | 1 |
| 0 | 1 | 0 | i | 0 | -1 | 0 | -1i | 0 | 1 | 0 | i |
| i | 0 | i | 0 | i | 0 | I | 0 | -1 | 0 | -1 | 0 |

| 43 | | 44 | | 45 | | 46 | | 47 | | 48 | |
|---|---|---|---|---|---|---|---|---|---|---|---|
| 1 | 0 | 1 | 0 | 1 | 0 | 1 | 0 | 1 | 0 | 1 | 0 |
| 0 | 1 | 0 | 1 | 0 | 1 | 0 | 1 | 0 | 1 | 0 | 1 |
| 0 | -1 | 0 | -1i | 0 | 1 | 0 | i | 0 | -1 | 0 | -1i |
| -1 | 0 | -1 | 0 | -1i | 0 | -1i | 0 | -1i | 0 | -1i | 0 |

Numbers of the precoding matrices in the precoding matrix codebook finally obtained according to the method of the present invention are:

[4 2 13 15 12 10 5 7 17 19 25 27 33 35 41 43].

Table 3 shows the precoding matrix universal set P when the number of transmission layers (namely number of ranks) supported by the multi-antenna communication system is 3. Like Table 1, the numerals in the blackened frames in Table 3 indicate the numbers of the precoding matrices, while the numerals in the four rows of the following three columns indicate the elements of the precoding matrices that correspond to the above number.

Table 3

| 1 | | | 2 | | | 3 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| 0.5 | 0 | 0.7071 | 0.5 | -0.7071 | 0 | 0.5 | 0 | -0.7071 |
| 0.5 | 0 | -0.7071 | 0.5 | 0 | -0.7071 | 0.5 | -0.7071 | 0 |

| 4 | | | 5 | | | 6 | | |
|---|---|---|---|---|---|---|---|---|
| 0.5 | 0.7071 | 0 | 0.5 | 0.7071 | 0 | 0.5 | 0.7071 | 0 |
| 0.5i | -0.7071 i | 0 | 0.5i | 0 | 0.7071 | 0.5i | 0 | 0.7071 |
| 0.5 | 0 | 0.7071 | 0.5 | -0.7071 | 0 | 0.5 | 0 | 0.7071 i |
| 0.5 | 0 | -0.7071 | 0.5 | 0 | 0.7071 i | 0.5 | -0.7071 | 0 |

| 7 | | | 8 | | | 9 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| 0.5 | 0 | 0.7071 | 0.5 | -0.7071 | 0 | 0.5 | 0 | 0.7071 |
| 0.5 | 0 | -0.7071 | 0.5 | 0 | 0.7071 | 0.5 | -0.7071 | 0 |

| 10 | | | 11 | | | 12 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071 i | 0 | -0.5i | 0 | 0.7071 | -0.5i | 0 | 0.7071 |
| 0.5 | 0 | 0.7071 | 0.5 | -0.7071 | 0 | 0.5 | 0 | -0.7071i |
| 0.5 | 0 | -0.7071 | 0.5 | 0 | -0.7071i | 0.5 | -0.7071 | 0 |

| 13 | | | 14 | | | 15 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| 0.5i | 0 | 0.7071 | 0.5i | -0.7071 i | 0 | 0.5i | 0 | -0.7071i |
| 0.5 | 0 | 0.7071i | 0.5 | 0 | -0.7071 | 0.5 | -0.7071 | 0 |

| 16 | | | 17 | | | 18 | | |
|---|---|---|---|---|---|---|---|---|
| 0.5 | 0.7071 | 0 | 0.5 | 0.7071 | 0 | 0.5 | 0.7071 | 0 |
| 0.5i | -0.7071 i | 0 | 0.5i | 0 | 0.7071 | 0.5i | 0 | 0.7071 |
| 0.5i | 0 | 0.7071 | 0.5i | -0.7071i | 0 | 0.5i | 0 | -0.7071 |
| 0.5 | 0 | 0.7071i | 0.5 | 0 | 0.7071i | 0.5 | -0.7071 | 0 |

| 19 | | | 20 | | | 21 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |

(continued)

| 19 | | | 20 | | | 21 | | |
|---|---|---|---|---|---|---|---|---|
| 0.5i | 0 | 0.7071 | 0.5i | -0.7071i | 0 | 0.5i | 0 | 0.7071 i |
| 0.5 | 0 | 0.7071i | 0.5 | 0 | 0.7071 | 0.5 | -0.7071 | 0 |

| 22 | | | 23 | | | 24 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071 i | 0 | -0.5i | 0 | 0.7071 | -0.5i | 0 | 0.7071 |
| 0.5i | 0 | 0.7071 | 0.5i | -0.7071i | 0 | 0.5i | 0 | 0.7071 |
| 0.5 | 0 | 0.7071i | 0.5 | 0 | -0.7071i | 0.5 | -0.7071 | 0 |

| 25 | | | 26 | | | 27 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| -0.5 | 0 | 0.7071 | -0.5 | 0.7071 | 0 | -0.5 | 0 | 0.7071 |
| 0.5 | 0 | 0.7071 | 0.5 | 0 | -0.7071 | 0.5 | -0.7071 | 0 |

| 28 | | | 29 | | | 30 | | |
|---|---|---|---|---|---|---|---|---|
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| -0.5 | 0 | 0.7071 | -0.5 | 0.7071 | 0 | -0.5 | 0 | -0.7071i |
| 0.5 | 0 | 0.7071 | 0.5 | 0 | 0.7071i | 0.5 | -0.7071 | 0 |

| 31 | | | 32 | | | 33 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| -0.5 | 0 | 0.7071 | -0.5 | 0.7071 | 0 | -0.5 | 0 | -0.7071 |
| 0.5 | 0 | 0.7071 | 0.5 | 0 | 0.7071 | 0.5 | -0.7071 | 0 |

| 34 | | | 35 | | | 36 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| -0.5 | 0 | 0.7071 | -0.5 | 0.7071 | 0 | -0.5 | 0 | 0.7071 i |
| 0.5 | 0 | 0.7071 | 0.5 | 0 | -0.7071i | 0.5 | -0.7071 | 0 |

| 37 | | | 38 | | | 39 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| -0.5i | 0 | 0.7071 | -0.5i | 0.7071i | 0 | -0.5i | 0 | 0.7071i |
| 0.5 | 0 | -0.7071 i | 0.5 | 0 | -0.7071 | 0.5 | -0.7071 | 0 |

(continued)

| 40 | | | 41 | | | 42 | | |
|---|---|---|---|---|---|---|---|---|
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| -0.5i | 0 | 0.7071 | -0.5i | 0.7071i | 0 | -0.5i | 0 | 0.7071 |
| 0.5 | 0 | -0.7071i | 0.5 | 0 | 0.7071i i | 0.5 | -0.7071 | 0 |

| 43 | | | 44 | | | 45 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| -0.5i | 0 | 0.7071 | -0.5i | 0.7071i | 0 | -0.5i | 0 | -0.7071i |
| 0.5 | 0 | -0.7071i i | 0.5 | 0 | 0.7071 | 0.5 | -0.7071 | 0 |

| 46 | | | 47 | | | 48 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| -0.5i | 0 | 0.7071 | -0.5i | 0.7071i | 0 | -0.5i | 0 | -0.7071 |
| 0.5 | 0 | -0.7071i | 0.5 | 0 | -0.7071i | 0.5 | -0.7071 | 0 |

| 49 | | | 50 | | | 51 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| 0.5 | 0 | 0.7071 | 0.5 | -0.7071 | 0 | 0.5 | 0 | -0.7071 |
| 0.5i | 0 | -0.7071i | 0.5i | 0 | -0.7071i | 0.5i | -0.7071i | 0 |

| 52 | | | 53 | | | 54 | | |
|---|---|---|---|---|---|---|---|---|
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| 0.5 | 0 | 0.7071 | 0.5 | -0.7071 | 0 | 0.5 | 0 | 0.7071i |
| 0.5i | 0 | -0.7071i | 0.5i | 0 | -0.7071 | 0.5i | -0.7071i | 0 |

| 55 | | | 56 | | | 57 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| 0.5 | 0 | 0.7071 | 0.5 | -0.7071 | 0 | 0.5 | 0 | 0.7071 |
| 0.5i | 0 | -0.7071i | 0.5i | 0 | 0.7071i | 0.5i | -0.7071i | 0 |

| 58 | | | 59 | | | 60 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |

(continued)

| 58 | | | 59 | | | 60 | | |
|---|---|---|---|---|---|---|---|---|
| 0.5 | 0 | 0.7071 | 0.5 | -0.7071 | 0 | 0.5 | 0 | -0.7071i |
| 0.5i | 0 | -0.7071i | 0.5i | 0 | 0.7071 | 0.5i | -0.7071i | 0 |
| **61** | | | **62** | | | **63** | | |
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| 0.5i | 0 | 0.7071 | 0.5i | -0.7071i | 0 | 0.5i | 0 | -0.7071i |
| 0.5i | 0 | -0.7071 | 0.5i | 0 | -0.7071i | 0.5i | -0.7071i | 0 |
| **64** | | | **65** | | | **66** | | |
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| 0.5i | 0 | 0.7071 | 0.5i | -0.7071i | 0 | 0.5i | 0 | -0.7071 |
| 0.5i | 0 | -0.7071 | 0.5i | 0 | -0.7071 | 0.5i | -0.7071i | 0 |
| **67** | | | **68** | | | **69** | | |
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| 0.5i | 0 | 0.7071 | 0.5i | -0.7071i | 0 | 0.5i | 0 | 0.7071i |
| 0.5i | 0 | -0.7071 | 0.5i | 0 | 0.7071i | 0.5i | -0.7071i | 0 |
| **70** | | | **71** | | | **72** | | |
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| 0.5i | 0 | 0.7071 | 0.5i | -0.7071i | 0 | 0.5i | 0 | 0.7071 |
| 0.5i | 0 | -0.7071 | 0.5i | 0 | 0.7071 | 0.5i | -0.7071i | 0 |
| **73** | | | **74** | | | **75** | | |
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| -0.5 | 0 | 0.7071 | -0.5 | 0.7071 | 0 | -0.5 | 0 | 0.7071 |
| 0.5i | 0 | 0.7071i | 0.5i | 0 | -0.7071i | 0.5i | -0.7071i | 0 |
| **76** | | | **77** | | | **78** | | |
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| -0.5 | 0 | 0.7071 | -0.5 | 0.7071 | 0 | -0.5 | 0 | -0.7071i |
| 0.5i | 0 | 0.7071i | 0.5i | 0 | -0.7071 | 0.5i | -0.7071i | 0 |
| **79** | | | **80** | | | **81** | | |
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| -0.5 | 0 | 0.7071 | -0.5 | 0.7071 | 0 | -0.5 | 0 | -0.7071 |
| 0.5i | 0 | 0.7071i | 0.5i | 0 | 0.7071i | 0.5i | -0.7071i | 0 |

(continued)

| 82 | | | 83 | | | 84 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| -0.5 | 0 | 0.7071 | -0.5 | 0.7071 | 0 | -0.5 | 0 | 0.7071i |
| 0.5i | 0 | 0.7071i | 0.5i | 0 | 0.7071 | 0.5i | -0.7071i | 0 |

| 85 | | | 86 | | | 87 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| -0.5i | 0 | 0.7071 | -0.5i | 0.7071i | 0 | -0.5i | 0 | 0.7071i |
| 0.5i | 0 | 0.7071 | 0.5i | 0 | -0.7071i | 0.5i | -0.7071i | 0 |

| 88 | | | 89 | | | 90 | | |
|---|---|---|---|---|---|---|---|---|
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| -0.5i | 0 | 0.7071 | -0.5i | 0.7071i | 0 | -0.5i | 0 | 0.7071 |
| 0.5i | 0 | 0.7071 | 0.5i | 0 | -0.7071 | 0.5i | -0.7071i | 0 |

| 91 | | | 92 | | | 93 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| -0.5i | 0 | 0.7071 | -0.5i | 0.7071i | 0 | -0.5i | 0 | -0.7071i |
| 0.5i | 0 | 0.7071 | 0.5i | 0 | 0.7071i | 0.5i | -0.7071i | 0 |

| 94 | | | 95 | | | 96 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| -0.5i | 0 | 0.7071 | -0.5i | 0.7071i | 0 | -0.5i | 0 | -0.7071 |
| 0.5i | 0 | 0.7071 | 0.5i | 0 | 0.7071 | 0.5i | -0.7071i | 0 |

| 97 | | | 98 | | | 99 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| 0.5 | 0 | 0.7071 | 0.5 | -0.7071 | 0 | 0.5 | 0 | -0.7071 |
| -0.5 | 0 | 0.7071 | -0.5 | 0 | 0.7071 | -0.5 | 0.7071 | 0 |

| 100 | | | 101 | | | 102 | | |
|---|---|---|---|---|---|---|---|---|
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| 0.5 | 0 | 0.7071 | 0.5 | -0.7071 | 0 | 0.5 | 0 | 0.7071i |
| -0.5 | 0 | 0.7071 | -0.5 | 0 | -0.7071i | -0.5 | 0.7071 | 0 |

| 103 | | | 104 | | | 105 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| 0.5 | 0 | 0.7071 | 0.5 | -0.7071 | 0 | 0.5 | 0 | 0.7071 |
| -0.5 | 0 | 0.7071 | -0.5 | 0 | -0.7071 | -0.5 | 0.7071 | 0 |

(continued)

| 106 | | | 107 | | | 108 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| 0.5 | 0 | 0.7071 | 0.5 | -0.7071 | 0 | 0.5 | 0 | -0.7071i |
| -0.5 | 0 | 0.7071 | -0.5 | 0 | 0.7071i | -0.5 | 0.7071 | 0 |

| 109 | | | 110 | | | 111 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| 0.5i | 0 | 0.7071 | 0.5i | -0.7071i | 0 | 0.5i | 0 | -0.7071i |
| -0.5 | 0 | -0.7071i | -0.5 | 0 | 0.7071 | -0.5 | 0.7071 | 0 |

| 112 | | | 113 | | | 114 | | |
|---|---|---|---|---|---|---|---|---|
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| 0.5i | 0 | 0.7071 | 0.5i | -0.7071i | 0 | 0.5i | 0 | -0.7071 |
| -0.5 | 0 | -0.7071i | -0.5 | 0 | -0.7071i | -0.5 | 0.7071 | 0 |

| 115 | | | 116 | | | 117 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| 0.5i | 0 | 0.7071 | 0.5i | -0.7071i | 0 | 0.5i | 0 | 0.7071i |
| -0.5 | 0 | -0.7071 i | -0.5 | 0 | -0.7071 | -0.5 | 0.7071 | 0 |

| 118 | | | 119 | | | 120 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| 0.5i | 0 | 0.7071 | 0.5i | -0.7071i | 0 | 0.5i | 0 | 0.7071 |
| -0.5 | 0 | -0.7071i | -0.5 | 0 | 0.7071i | -0.5 | 0.7071 | 0 |

| 121 | | | 122 | | | 123 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| -0.5 | 0 | 0.7071 | -0.5 | 0.7071 | 0 | -0.5 | 0 | 0.7071 |
| -0.5 | 0 | -0.7071 | -0.5 | 0 | 0.7071 | -0.5 | 0.7071 | 0 |

| 124 | | | 125 | | | 126 | | |
|---|---|---|---|---|---|---|---|---|
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| -0.5 | 0 | 0.7071 | -0.5 | 0.7071 | 0 | -0.5 | 0 | -0.7071i |
| -0.5 | 0 | -0.7071 | -0.5 | 0 | -0.7071i | -0.5 | 0.7071 | 0 |

| 127 | | | 128 | | | 129 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| -0.5 | 0 | 0.7071 | -0.5 | 0.7071 | 0 | -0.5 | 0 | -0.7071 |
| -0.5 | 0 | -0.7071 | -0.5 | 0 | -0.7071 | -0.5 | 0.7071 | 0 |

(continued)

| 130 | | | 131 | | | 132 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| -0.5 | 0 | 0.7071 | -0.5 | 0.7071 | 0 | -0.5 | 0 | 0.7071i |
| -0.5 | 0 | -0.7071 | -0.5 | 0 | 0.7071i | -0.5 | 0.7071 | 0 |

| 133 | | | 134 | | | 135 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| -0.5i | 0 | 0.7071 | -0.5i | 0.7071i | 0 | -0.5i | 0 | 0.7071i |
| -0.5 | 0 | 0.7071i | -0.5 | 0 | 0.7071 | -0.5 | 0.7071 | 0 |

| 136 | | | 137 | | | 138 | | |
|---|---|---|---|---|---|---|---|---|
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| -0.5i | 0 | 0.7071 | -0.5i | 0.7071i | 0 | -0.5i | 0 | 0.7071 |
| -0.5 | 0 | 0.7071i | -0.5 | 0 | -0.7071i | -0.5 | 0.7071 | 0 |

| 139 | | | 140 | | | 141 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| -0.5i | 0 | 0.7071 | -0.5i | 0.7071i | 0 | -0.5i | 0 | -0.7071i |
| -0.5 | 0 | 0.7071i | -0.5 | 0 | -0.7071 | -0.5 | 0.7071 | 0 |

| 142 | | | 143 | | | 144 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| -0.5i | 0 | 0.7071 | -0.5i | 0.7071i | 0 | -0.5i | 0 | -0.7071 |
| -0.5 | 0 | 0.7071i | -0.5 | 0 | 0.7071i | -0.5 | 0.7071 | 0 |

| 145 | | | 146 | | | 147 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| 0.5 | 0 | 0.7071 | 0.5 | -0.7071 | 0 | 0.5 | 0 | -0.7071 |
| -0.5i | 0 | 0.7071i | -0.5i | 0 | 0.7071i | -0.5i | 0.7071i | 0 |

| 148 | | | 149 | | | 150 | | |
|---|---|---|---|---|---|---|---|---|
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| 0.5 | 0 | 0.7071 | 0.5 | -0.7071 | 0 | 0.5 | 0 | 0.7071i |
| -0.5i | 0 | 0.7071i | -0.5i | 0 | 0.7071 | -0.5i | 0.7071i | 0 |

| 151 | | | 152 | | | 153 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| 0.5 | 0 | 0.7071 | 0.5 | -0.7071 | 0 | 0.5 | 0 | 0.7071 |
| -0.5i | 0 | 0.7071i | -0.5i | 0 | -0.7071i | -0.5i | 0.7071i | 0 |

(continued)

| 154 | | | 155 | | | 156 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| 0.5 | 0 | 0.7071 | 0.5 | -0.7071 | 0 | 0.5 | 0 | -0.7071i |
| -0.5i | 0 | 0.7071i | -0.5i | 0 | -0.7071 | -0.5i | 0.7071i | 0 |

| 157 | | | 158 | | | 159 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| 0.5i | 0 | 0.7071 | 0.5i | -0.7071i | 0 | 0.5i | 0 | -0.7071i |
| -0.5i | 0 | 0.7071 | -0.5i | 0 | 0.7071i | -0.5i | 0.7071i | 0 |

| 160 | | | 161 | | | 162 | | |
|---|---|---|---|---|---|---|---|---|
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| 0.5i | 0 | 0.7071 | 0.5i | -0.7071i | 0 | 0.5i | 0 | -0.7071 |
| -0.5i | 0 | 0.7071 | -0.5i | 0 | 0.7071 | -0.5i | 0.7071i | 0 |

| 163 | | | 164 | | | 165 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| 0.5i | 0 | 0.7071 | 0.5i | -0.7071i | 0 | 0.5i | 0 | 0.7071i |
| -0.5i | 0 | 0.7071 | -0.5i | 0 | -0.7071i | -0.5i | 0.7071i | 0 |

| 166 | | | 167 | | | 168 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| 0.5i | 0 | 0.7071 | 0.5i | -0.7071i | 0 | 0.5i | 0 | 0.7071 |
| -0.5i | 0 | 0.7071 | -0.5i | 0 | -0.7071 | -0.5i | 0.7071i | 0 |

| 169 | | | 170 | | | 171 | | |
|---|---|---|---|---|---|---|---|---|
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| -0.5 | 0 | 0.7071 | -0.5 | 0.7071 | 0 | -0.5 | 0 | 0.7071 |
| -0.5i | 0 | -0.7071i | -0.5i | 0 | 0.7071i | -0.5i | 0.7071i | 0 |

| 172 | | | 173 | | | 174 | | |
|---|---|---|---|---|---|---|---|---|
| 0.5 | 07071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| -0.5 | 0 | 0.7071 | -0.5 | 0.7071 | 0 | -0.5 | 0 | -0.7071i |
| -0.5i | 0 | -0.7071i | -0.5i | 0 | 0.7071 | -0.5i | 0.7071i | 0 |

| 175 | | | 176 | | | 177 | | |
|---|---|---|---|---|---|---|---|---|
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| -0.5 | 0 | 0.7071 | -0.5 | 0.7071 | 0 | -0.5 | 0 | -0.7071 |
| -0.5i | 0 | -0.7071i | -0.5i | 0 | -0.7071i | -0.5i | 0.7071i | 0 |

(continued)

| 178 | | | 179 | | | 180 | | |
|---|---|---|---|---|---|---|---|---|
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| -0.5 | 0 | 0.7071 | -0.5 | 0.7071 | 0 | -0.5 | 0 | 0.7071i |
| -0.5i | 0 | -0.7071i | -0.5i | 0 | -0.7071 | -0.5i | 0.7071i | 0 |
| 181 | | | 182 | | | 183 | | |
| 0.5 | 0.7071 | 0 | 0.5 | 0.7071 | 0 | 0.5 | 0.7071 | 0 |
| 0.5 | -0.7071 | 0 | 0.5 | 0 | 0.7071 | 0.5 | 0 | 0.7071 |
| -0.5i | 0 | 0.7071 | -0.5i | 0.7071i | 0 | -0.5i | 0 | 0.7071i |
| -0.5i | 0 | -0.7071 | -0.5i | 0 | 0.7071i | -0.5i | 0.7071i | 0 |
| 184 | | | 185 | | | 186 | | |
| 0.5 | 0.7071 | 0 | 0.5 | 0.7071 | 0 | 0.5 | 0.7071 | 0 |
| 0.5i | -0.7071i | 0 | 0.5i | 0 | 0.7071 | 0.5i | 0 | 0.7071 |
| -0.5i | 0 | 0.7071 | -0.5i | 0.7071i | 0 | -0.5i | 0 | 0.7071 |
| -0.5i | 0 | -0.7071 | -0.5i | 0 | 0.7071 | -0.5i | 0.7071i | 0 |
| 187 | | | 188 | | | 189 | | |
| 0.5 | 0.7071 | 0 | 0.5 | 0.7071 | 0 | 0.5 | 0.7071 | 0 |
| -0.5 | 0.7071 | 0 | -0.5 | 0 | 0.7071 | -0.5 | 0 | 0.7071 |
| -0.5i | 0 | 0.7071 | -0.5i | 0.7071i | 0 | -0.5i | 0 | -0.7071i |
| -0.5i | 0 | -0.7071 | -0.5i | 0 | -0.7071i | -0.5i | 0.7071i | 0 |
| 190 | | | 191 | | | 192 | | |
| 0.5 | 0.7071 | 0 | 0.5 | 0.7071 | 0 | 0.5 | 0.7071 | 0 |
| -0.5i | 0.7071i | 0 | -0.5i | 0 | 0.7071 | -0.5i | 0 | 0.7071 |
| -0.5i | 0 | 0.7071 | -0.5i | 0.7071i | 0 | -0.5i | 0 | -0.7071 |
| -0.5i | 0 | -0.7071 | -0.5i | 0 | -0.7071 | -0.5i | 0.7071i | 0 |

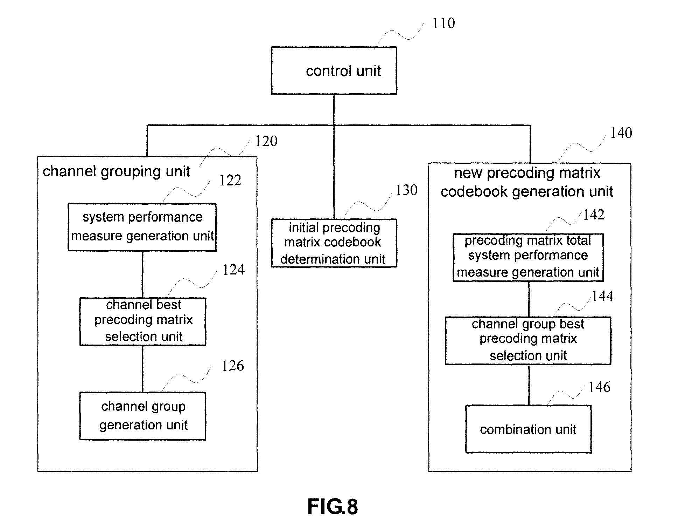

Numbers of the precoding matrices in the precoding matrix codebook having a size of 20 as finally obtained according to the method of the present invention are:
[36 6 108 5 115 133 10 28 161 89 191 71 51 171 153 81 13 43 130 100].
Numbers of the precoding matrices in the precoding matrix codebook having a size of 16 as finally obtained according to the method of the present invention are:
[36 6 108 5 115 133 13 43 161 89 191 71 51 171 153 81].
An exemplary device for generating a precoding matrix codebook used in a multi-antenna communication system according to the present invention is described below with reference to Figs. 1, 2 and 8. Fig. 8 is a block diagram illustrating an exemplary device for generating a precoding matrix codebook according to the embodiment of the present invention. This generating device executes the aforementioned method for generating a precoding matrix codebook, and includes a control unit 110, a channel grouping unit 120, an initial precoding matrix codebook determination unit 130 and a new precoding matrix codebook generation unit 140. As should be comprehensible to persons skilled in the art, the control unit 110, the channel grouping unit 120, the initial precoding matrix codebook determination unit 130 and the new precoding matrix codebook generation unit 140 in the generating device shown in Fig. 8 may be realized either by logical circuits or by programs stored on machine-readable media.
The initial precoding matrix codebook determination unit 130 is used for determining an initial precoding matrix codebook Q consisting of L precoding matrices $Q_l$ (where $1 \leq l \leq L$), wherein L is an integer greater than 1. The initial precoding matrix codebook determination unit 130 can determine the existing precoding matrix codebook of the multi-antenna communication system as the initial precoding matrix codebook Q, or randomly select L precoding matrices from a precoding matrix universal set P as the initial precoding matrix codebook Q. The precoding matrix universal set P can be stored in advance in the initial precoding matrix codebook determination unit 130. Alternatively, the initial precoding matrix codebook determination unit 130 may further include a precoding matrix universal set generating unit (not shown) for generating the precoding matrix universal set P. As previously mentioned, the precoding matrix universal set P is generated according to the number of physical antennas in the multi-antenna communication system and the number of transmission layers supported by the multi-antenna communication system, and includes M precoding matrices, wherein M is an integer greater than 1 and L<M. In an embodiment, the initial precoding matrix codebook determination unit 130 can be a program stored in the multi-antenna communication system or on a machine-readable medium. In another embodiment, the initial precoding matrix codebook determination unit 130 can be an independent software application program or constitute a part of a software application program that executes additional tasks associated with operations of the multi-antenna communication system.

The channel grouping unit 120 divides the channel set $H=[H_1,H_2,H_3,...,H_N]$ into L channel groups that correspond to precoding matrices in the initial precoding matrix codebook Q on a one-by-one basis. As previously mentioned, the channel set H is a channel set consisting of N channel instances $H_n$ and capable of reflecting channel statistic characteristics of the multi-antenna communication system, $1 \leq n \leq N$, and N is an integer greater than 1.

The new precoding matrix codebook generation unit 140 selects from the precoding matrix universal set P the precoding matrices each optimally matches one channel group, so as to form the new precoding matrix codebook Q'.

The control unit 110 determines whether the initial precoding matrix codebook Q is identical with the new precoding matrix codebook Q', and outputs the new precoding matrix codebook Q' as the finally generated precoding matrix codebook for use in the multi-antenna communication system if the initial precoding matrix codebook Q is identical with the new precoding matrix codebook Q'. However, if the initial precoding matrix codebook Q is not identical with the new precoding matrix codebook Q', the control unit 110 takes the new precoding matrix codebook Q' as the initial precoding matrix codebook Q, and simultaneously controls the channel grouping unit 120 to regroup the channel set H, and controls the new precoding matrix codebook generation unit 140 to generate the new precoding matrix codebook Q' according to the regrouped L channel groups, until the generated new precoding matrix codebook Q' is identical with the initial precoding matrix codebook Q.

More specifically, the channel grouping unit 120 includes a system performance measure generation unit 122, a channel best precoding matrix selection unit 124 and a channel group generation unit 126.

For each channel instance in the channel set H and each precoding matrix in the initial precoding matrix codebook Q, the system performance measure generation unit 122 calculates the post-priori signal-to-noise ratio vector of the multi-antenna communication system under the channel instance when the precoding matrix is used according to the method described with reference to Fig. 2, and generates the corresponding system performance measure according to the post-priori signal-to-noise ratio vector.

For each channel instance in the channel set H, according to the method described with reference to step ST208 in Fig. 2, the channel best precoding matrix selection unit 124 selects, a precoding matrix in the initial precoding matrix codebook Q with the best system performance measure, as the precoding matrix corresponding to the channel instance.

The channel group generation unit 126 takes all channel instances corresponding to the same and one precoding matrix as a channel group corresponding to this precoding matrix according to the method described with reference to step ST210 in Fig. 2, so as to generate L channel groups that correspond to the precoding matrices in the initial precoding matrix codebook Q on a one-by-one basis.

More specifically, the new precoding matrix codebook generation unit 140 can include a precoding matrix total system performance measure generation unit 142, a channel group best precoding matrix selection unit 144 and a combination unit 146.

The precoding matrix total system performance measure generation unit 142 performs the following processes on each channel group of the L channel groups generated by the channel grouping unit 120:

(1) calculating a post-priori signal-to-noise ratio vector of the multi-antenna communication system when each precoding matrix in the precoding matrix universal set P is used under each channel instance in the channel group;

(2) generating a corresponding system performance measure according to the calculated post-priori signal-to-noise ratio vector; and

(3) summating system performance measures of the multi-antenna communication system under all channel instances in the channel group for each precoding matrix in the precoding matrix universal set P, and taking the resultant summation as the total system performance measure of the precoding matrix.

The channel group best precoding matrix selection unit 144 selects, for each channel group, the precoding matrix in the precoding matrix universal set P with the best total system performance measure, as the precoding matrix that optimally matches the channel group.

The combination unit 146 combines the precoding matrices selected by the channel group best precoding matrix selection unit 144 for each channel group, as the new precoding matrix codebook Q'.

Moreover, the multi-antenna communication system can generate the new precoding matrix codebook for use in subsequent transmission by using the method of generating a precoding matrix according to the present invention.

Further, the transmitter in the multi-antenna communication system can also generate the new precoding matrix codebook for use in subsequent transmission by using the method of generating a precoding matrix according to the present invention.

Furthermore, the receiver in the multi-antenna communication system can also generate the new precoding matrix codebook by using the method of generating a precoding matrix according to the present invention, and transmit the generated precoding matrix codebook to the transmitter, so that the precoding matrix codebook can be used in the communication therebetween.

Additionally, it is obvious that each operational process of the aforementioned method according to the present invention can also be realized in the form of a computer-executable program stored in various machine-readable storage media.

In addition, the objects of the present invention can also be achieved by the mode specified below: directly or indirectly supplying the storage medium storing the aforementioned executable program code to a system or a device, and reading and executing the program code by a computer or a central processing unit (CPU) in the system or device. In this case, as long as the system or the device possesses the function to execute programs, embodiments of the present invention are not restricted to the program, and the program may also assume any random form, such as target program, interpreter-executed program, or script program supplied to an operating system, etc.

The aforementioned machine-readable storage media include, but are not limited to, various memories and storage units, semiconductor devices, magnetic units such as optical, magnetic and magneto-optical disks, as well as other media adapted to storing information.

Moreover, the present invention can also be realized by a computer through corresponding websites connected to the Internet, downloading and installing the computer program code according to the present invention into the computer, and executing the program.

Finally, as should also be noted, terms showing relationship such as left and right, first and second, and so on, as used in this paper are merely used to differentiate one entity or operation from another entity or operation, and are not necessarily meant to require or suggest that there be any such actual relationship or sequence between these entities or operations. Moreover, terms of "comprising", "including" or any other variants meant to cover nonexclusive inclusion to include processes, methods, objects or devices of a series of essentials not only include these essentials but also include other essentials not explicitly listed out, or further include essentials inherent in these processes, methods, objects or devices. In the absence of more restrictions, the essential defined by the wording of "including a..." does not exclude additional identical essentials besides including the process, method, object or device of the essential.

Although the embodiments of the present invention are described in detail above with reference to the accompanying drawings, it should be clear that the above-described embodiments are used merely to explain the present invention, rather than to constitute restrictions of the present invention. To persons skilled in the art, it is possible to make various modifications and variations of the aforementioned embodiments without departing from the substance and scope of the present invention. Therefore, the scope of the present invention is defined only by the attached claims and equivalent meanings thereof.

**Claims**

**1.** A method for generating precoding matrix codebook used in a multi-antenna communication system, comprising:

a) determining an initial precoding matrix codebook consisted of L precoding matrixes, wherein L is an integer larger than one, each precoding matrix of the initial precoding matrix codebook is selected from a precoding matrix universal set generated from the number of physical antennas of the multi-antenna communication system and the number of ranks supported by the multi-antenna communication system and including M precoding matrixes, wherein M is an integer larger than one and L< M;

b) dividing a channel set into L channel groups being in one-to-one correspondence to the precoding matrix of the initial precoding matrix codebook, wherein the channel set is consisted of N channel instances and is capable of reflecting channel statistic characteristics of the multi-antenna communication system, wherein N is an integer larger than one;

c) selecting for each channel group, a precoding matrix which optimally matches the channel group, from the precoding matrix universal set, to form a new precoding matrix codebook;

d) judging whether the initial precoding matrix codebook and the new precoding matrix codebook are same; and

e) adopting the new precoding matrix codebook as the initial precoding matrix codebook and returning to the step b) to proceed, if the initial precoding matrix codebook and the new precoding matrix codebook are not same; and adopting the new precoding matrix codebook as a precoding matrix codebook to be used in the multi-antenna communication system if the initial precoding matrix codebook and the new precoding matrix codebook are same.

2. The method according to claim 1, wherein the step b) comprising:

for each channel instance of the channel set and each precoding matrix of the initial precoding matrix codebook, computing a post-priori signal-to-noise ratio vector of the multi-antenna communication system when adopting the precoding matrix at the channel instance, and generating respective system performance measure according the post-priori signal-to-noise ratio vector;

for each channel instance of the channel set, selecting a precoding matrix which system performance measure is best in the initial precoding matrix codebook, as a precoding matrix corresponding to the channel instance; and grouping all channel instances corresponding to the same precoding matrix, as a channel group corresponding to the precoding matrix, thereby dividing the channel set into the L channel groups.

3. The method according to claim 2, wherein the step c) comprising performing following steps for each channel group:

for each channel instance of the channel group and each precoding matrix of the precoding matrix universal set, computing a post-priori signal-to-noise ratio vector of the multi-antenna communication system when adopting the precoding matrix at the channel instance, and generating respective system performance measure according to the computed postprior signal-to-noise ratio vector;

for each precoding matrix of the precoding matrix universal set, summating the system performance measures of the multi-antenna communication system at all channel instances of the channel group and adopting the summation as a total system performance measure of the percoding matrix; and

selecting, from the precoding matrix universal set, a precoding matrix which total system performance measure is best, as the precoding matrix optimally matches the channel group.

4. The method according to claim 1, wherein the channel set is generated each time the step b) is performed.

5. The method according to claim 1, wherein the initial precoding matrix codebook is randomly selected from the precoding matrix universal set or is an existing precoding matrix codebook of the multi-antenna communication system.

6. The method according to claim 2, wherein the system performance measure is system throughput, and the precoding matrix with the best system performance measure is a precoding matrix with the largest system throughput.

7. The method according to claim 2, wherein the system performance measure is system mutual information, and the precoding matrix with the best system performance measure is a precoding matrix with the largest system mutual information.

8. The method according to claim 2, wherein the system performance measure is system error block rate, and the precoding matrix with the best system performance measure is a precoding matrix with the smallest system error block rate.

9. A device for generating a precoding matrix codebook used in a multi-antenna communication system, comprising:

an initial precoding matrix codebook determination unit for determining an initial precoding matrix codebook consisted of L precoding matrixes, wherein L is an integer larger than one, each precoding matrix of the initial precoding matrix codebook is selected from a precoding matrix universal set generated from the number of physical antennas of the multi-antenna communication system and the number of ranks supported by the multi-antenna communication system and including M precoding matrixes, wherein M is an integer larger than one and L< M;

a channel grouping unit for dividing a channel set into L channel groups being in one-to-one correspondence to the precoding matrix of the initial precoding matrix codebook, wherein the channel set is consisted of N channel instances and is capable of reflecting channel statistic characteristics of the multi-antenna communication system, and wherein N is an integer larger than one;

a new precoding matrix codebook generation unit for selecting a precoding matrix which optimally matches the channel group from the precoding matrix universal set, to form a new precoding matrix codebook;

a control unit for judging whether the initial precoding matrix codebook and the new precoding matrix codebook are same; for outputting the new precoding matrix codebook as a precoding matrix codebook to be used in the multi-antenna communication system, if the initial precoding matrix codebook and the new precoding matrix codebook are same; while adopting the new precoding matrix codebook as the initial precoding matrix codebook, controlling the channel grouping unit to re-divide the channel set, and controlling the new precoding matrix codebook generation unit to regenerate a new precoding matrix codebook, until the new precoding matrix codebook and the initial precoding matrix codebook are same, if the initial precoding matrix codebook and the new precoding matrix codebook are not same.

10. The device according to claim 9, the channel grouping unit comprising:

a system performance measure generation unit for computing, for each channel instance of the channel set and each precoding matrix of the initial precoding matrix codebook, a post-priori signal-to-noise ratio vector of the multi-antenna communication system when adopting the precoding matrix at the channel instance, and generating respective system performance measure according the post-priori signal-to-noise ratio vector;

a channel best precoding matrix selection unit for selecting for each channel instance of the channel set, a precoding matrix which system performance measure is best in the initial precoding matrix codebook, as a precoding matrix corresponding to the channel instance; and

a channel group generation unit for grouping all channel instances corresponding to the same precoding matrix, as a channel group corresponding to the precoding matrix, thereby generating the L channel groups being in one-to-one correspondence to the precoding matrix of the initial precoding matrix codebook.

11. The device according to the claim 10, wherein the new precoding matrix codebook generation unit comprising:

a precoding matrix total system performance measure generation unit, for each channel group:

computing a post-priori signal-to-noise ratio vector of the multi-antenna communication system when adopting each precoding matrix of the precoding matrix universal set at each channel instance of the channel group, and generating respective system performance measure according to the computed post-priori signal-to-noise ratio vector; and

for each precoding matrix of the precoding matrix universal set, summating the system performance measures of the multi-antenna communication system at all the channel instants of the channel group, and adopting the summation as a total system performance measure of the precoding matrix;

a channel group best precoding matrix selection unit for selecting, for each channel group, a precoding matrix which total system performance measure is best from the precoding matrix universal set, as the precoding matrix which optimally matches the channel group; and

a combination unit for combining precoding matrixes selected for each channel group by the channel group best precoding matrix selection unit, as the new precoding matrix codebook.

12. The device according to claim 9, wherein the channel grouping unit generates the channel set each time it operates.

13. The device according to claim 9, wherein the initial precoding matrix codebook is randomly selected from the precoding matrix universal set, or is an existing precoding matrix codebook of the multi-antenna communication system.

14. The device according to claim 10, wherein the system performance measure is system throughput, and the precoding matrix with the best system performance measure is a precoding matrix with the largest system throughput.

15. The device according to claim 10, wherein the system performance measure is system mutual information, and the precoding matrix with the best system performance measure is a precoding matrix with the largest system mutual information.

16. The device according to claim 10, wherein the system performance measure is system error block rate, and the precoding matrix with the best system performance measure is a precoding matrix with the smallest system error block rate.

17. A multi-antenna communication system that generates a precoding matrix codebook by using the method according to any one of claims 1-8.

18. A transmitter in a multi-antenna communication system, wherein the transmitter generates a precoding matrix codebook by using the method according to any one of claims 1-8.

19. A receiver in a multi-antenna communication system, the receiver generates a precoding matrix codebook by using the method according to any one of claims 1-8, and transmits the generated precoding matrix codebook to a transmitter to use the precoding matrix codebook during a communication therebetween.

20. A storage medium containing a machine-readable program code, when executed in a multi-antenna communication system or an information processing system, the multi-antenna communication system or the information processing system is operable to implement the method according to any one of claims 1-8.

21. A program product containing a machine-executable instrument, when executed in a multi-antenna communication system or an information processing system, the multi-antenna communication system or the information processing system is operable to implement the method according to any one of claims 1-8.

START

ST 102

determining initial precoding matrix codebook

ST 104

dividing channel universal set into L channel groups

ST 106

selecting precoding matrix optimally matching each
channel group from precoding matrix universal set

ST 108

generating new precoding matrix codebook

ST 114

taking new precoding matrix codebook
as initial precoding matrix codebook

ST 110

whether new precoding matrix codebook
being same as initial precoding matrix
codebook?

N

ST 112

Y

taking new precoding matrix codebook as finally
generated precoding matrix codebook

END

FIG.1

START

ST 202

generating channel set H

ST 204

calculating postpriori signal-to-noise ratio vector

ST 206

generating corresponding system performance measure

ST 208

finding out the corresponding precoding
matrix of each channel instance

ST 210

taking all channel instances corresponding to
same and single precoding matrix as channel
group corresponding to precoding matrix

END

**FIG.2**

| SNR (dB) | MI | SNR (dB) | MI | SNR (dB) | MI | SNR (dB) | MI | SNR (dB) | MI |
|---|---|---|---|---|---|---|---|---|---|
| -20 | 0.0144 | -10 | 0.1376 | 0 | 0.9718 | 10 | 1.9936 | 20 | 2 |
| -19.5 | 0.016 | -9.5 | 0.1534 | 0.5 | 1.0478 | 10.5 | 1.9966 | 20.5 | 2 |
| -19 | 0.018 | -9 | 0.171 | 1 | 1.1256 | 11 | 1.9984 | 21 | 2 |
| -18.5 | 0.0202 | -8.5 | 0.1906 | 1.5 | 1.2048 | 11.5 | 1.9994 | 21.5 | 2 |
| -18 | 0.0228 | -8 | 0.2122 | 2 | 1.2844 | 12 | 1.9998 | 22 | 2 |
| -17.5 | 0.0254 | -7.5 | 0.236 | 2.5 | 1.3634 | 12.5 | 2 | 22.5 | 2 |
| -17 | 0.0286 | -7 | 0.2622 | 3 | 1.4414 | 13 | 2 | 23 | 2 |
| -16.5 | 0.0318 | -6.5 | 0.2912 | 3.5 | 1.5168 | 13.5 | 2 | 23.5 | 2 |
| -16 | 0.0358 | -6 | 0.323 | 4 | 1.5888 | 14 | 2 | 24 | 2 |
| -15.5 | 0.04 | -5.5 | 0.3576 | 4.5 | 1.6562 | 14.5 | 2 | 24.5 | 2 |
| -15 | 0.045 | -5 | 0.3956 | 5 | 1.7184 | 15 | 2 | 25 | 2 |
| -14.5 | 0.0502 | -4.5 | 0.4368 | 5.5 | 1.7744 | 15.5 | 2 | 25.5 | 2 |
| -14 | 0.0564 | -4 | 0.4814 | 6 | 1.8238 | 16 | 2 | 26 | 2 |
| -13.5 | 0.063 | -3.5 | 0.53 | 6.5 | 1.8662 | 16.5 | 2 | 26.5 | 2 |
| -13 | 0.0704 | -3 | 0.582 | 7 | 1.9014 | 17 | 2 | 27 | 2 |
| -12.5 | 0.0788 | -2.5 | 0.638 | 7.5 | 1.9298 | 17.5 | 2 | 27.5 | 2 |
| -12 | 0.0884 | -2 | 0.6978 | 8 | 1.952 | 18 | 2 | 28 | 2 |
| -11.5 | 0.0986 | -1.5 | 0.7612 | 8.5 | 1.9684 | 18.5 | 2 | 28.5 | 2 |
| -11 | 0.1102 | -1 | 0.8282 | 9 | 1.9802 | 19 | 2 | 29 | 2 |
| -10.5 | 0.1232 | -0.5 | 0.8986 | 9.5 | 1.9884 | 19.5 | 2 | 29.5 | 2 |

**FIG.3**

| SNR (dB) | MI | SNR (dB) | MI | SNR (dB) | MI | SNR (dB) | MI | SNR (dB) | MI |
|---|---|---|---|---|---|---|---|---|---|
| −20 | 0.0134 | −10 | 0.1112 | 0 | 0.7552 | 10 | 3.1606 | 20 | 4 |
| −19.5 | 0.0148 | −9.5 | 0.1232 | 0.5 | 0.8262 | 10.5 | 3.2754 | 20.5 | 4 |
| −19 | 0.0166 | −9 | 0.136 | 1 | 0.9036 | 11 | 3.3842 | 21 | 4 |
| −18.5 | 0.0184 | −8.5 | 0.1504 | 1.5 | 0.9894 | 11.5 | 3.486 | 21.5 | 4 |
| −18 | 0.0204 | −8 | 0.1654 | 2 | 1.0808 | 12 | 3.5798 | 22 | 4 |
| −17.5 | 0.0228 | −7.5 | 0.1828 | 2.5 | 1.1802 | 12.5 | 3.6634 | 22.5 | 4 |
| −17 | 0.0254 | −7 | 0.2016 | 3 | 1.2872 | 13 | 3.7376 | 23 | 4 |
| −16.5 | 0.0286 | −6.5 | 0.2228 | 3.5 | 1.4008 | 13.5 | 3.8002 | 23.5 | 4 |
| −16 | 0.0316 | −6 | 0.245 | 4 | 1.5228 | 14 | 3.8534 | 24 | 4 |
| −15.5 | 0.0354 | −5.5 | 0.27 | 4.5 | 1.6532 | 14.5 | 3.8956 | 24.5 | 4 |
| −15 | 0.0392 | −5 | 0.2974 | 5 | 1.7886 | 15 | 3.929 | 25 | 4 |
| −14.5 | 0.0436 | −4.5 | 0.3262 | 5.5 | 1.9282 | 15.5 | 3.9526 | 25.5 | 4 |
| −14 | 0.0484 | −4 | 0.3594 | 6 | 2.073 | 16 | 3.9708 | 26 | 4 |
| −13.5 | 0.0538 | −3.5 | 0.3944 | 6.5 | 2.2166 | 16.5 | 3.9828 | 26.5 | 4 |
| −13 | 0.0598 | −3 | 0.4342 | 7 | 2.3616 | 17 | 3.9904 | 27 | 4 |
| −12.5 | 0.0662 | −2.5 | 0.4766 | 7.5 | 2.5052 | 17.5 | 3.995 | 27.5 | 4 |
| −12 | 0.0738 | −2 | 0.5224 | 8 | 2.6452 | 18 | 3.9976 | 28 | 4 |
| −11.5 | 0.082 | −1.5 | 0.5726 | 8.5 | 2.7824 | 18.5 | 3.9988 | 28.5 | 4 |
| −11 | 0.0908 | −1 | 0.627 | 9 | 2.9134 | 19 | 3.9996 | 29 | 4 |
| −10.5 | 0.1006 | −0.5 | 0.6896 | 9.5 | 3.0386 | 19.5 | 4 | 29.5 | 4 |

# FIG.4

| SNR (dB) | MI | SNR (dB) | MI | SNR (dB) | MI | SNR (dB) | MI | SNR (dB) | MI |
|---|---|---|---|---|---|---|---|---|---|
| -20 | 0.0128 | -10 | 0.0998 | 0 | 0.598 | 10 | 2.8724 | 20 | 5.8012 |
| -19.5 | 0.0142 | -9.5 | 0.1094 | 0.5 | 0.6512 | 10.5 | 3.0516 | 20.5 | 5.8566 |
| -19 | 0.0156 | -9 | 0.1208 | 1 | 0.7094 | 11 | 3.232 | 21 | 5.9004 |
| -18.5 | 0.0176 | -8.5 | 0.133 | 1.5 | 0.7722 | 11.5 | 3.4172 | 21.5 | 5.933 |
| -18 | 0.0196 | -8 | 0.1454 | 2 | 0.8406 | 12 | 3.6026 | 22 | 5.9576 |
| -17.5 | 0.022 | -7.5 | 0.1588 | 2.5 | 0.9172 | 12.5 | 3.7872 | 22.5 | 5.9734 |
| -17 | 0.0242 | -7 | 0.1744 | 3 | 0.997 | 13 | 3.9724 | 23 | 5.9854 |
| -16.5 | 0.027 | -6.5 | 0.1912 | 3.5 | 1.0846 | 13.5 | 4.1526 | 23.5 | 5.9922 |
| -16 | 0.03 | -6 | 0.2096 | 4 | 1.181 | 14 | 4.326 | 24 | 5.9958 |
| -15.5 | 0.0332 | -5.5 | 0.2298 | 4.5 | 1.2856 | 14.5 | 4.4934 | 24.5 | 5.9982 |
| -15 | 0.0368 | -5 | 0.2502 | 5 | 1.3942 | 15 | 4.654 | 25 | 5.9994 |
| -14.5 | 0.0408 | -4.5 | 0.2752 | 5.5 | 1.5128 | 15.5 | 4.8072 | 25.5 | 5.9996 |
| -14 | 0.0452 | -4 | 0.2992 | 6 | 1.6386 | 16 | 4.9538 | 26 | 6 |
| -13.5 | 0.05 | -3.5 | 0.3266 | 6.5 | 1.7716 | 16.5 | 5.0928 | 26.5 | 6 |
| -13 | 0.0552 | -3 | 0.355 | 7 | 1.9118 | 17 | 5.2238 | 27 | 6 |
| -12.5 | 0.0612 | -2.5 | 0.3884 | 7.5 | 2.0586 | 17.5 | 5.3474 | 27.5 | 6 |
| -12 | 0.0674 | -2 | 0.4222 | 8 | 2.2094 | 18 | 5.4592 | 28 | 6 |
| -11.5 | 0.0744 | -1.5 | 0.461 | 8.5 | 2.3688 | 18.5 | 5.5616 | 28.5 | 6 |
| -11 | 0.0822 | -1 | 0.5026 | 9 | 2.5322 | 19 | 5.6546 | 29 | 6 |
| -10.5 | 0.0906 | -0.5 | 0.548 | 9.5 | 2.7006 | 19.5 | 5.7348 | 29.5 | 6 |

**FIG.5**

FIG. 6

**FIG.7**

control unit 110

channel grouping unit 120

system performance measure generation unit 122

channel best precoding matrix selection unit 124

channel group generation unit 126

initial precoding matrix codebook determination unit 130

new precoding matrix codebook generation unit 140

precoding matrix total system performance measure generation unit 142

channel group best precoding matrix selection unit 144

combination unit 146

**FIG.8**

# INTERNATIONAL SEARCH REPORT

| | International application No. |
|---|---|
| | PCT/CN2010/070264 |

**A. CLASSIFICATION OF SUBJECT MATTER**

H04L 1/06 （2006.01）i

According to International Patent Classification (IPC) or to both national classification and IPC

**B. FIELDS SEARCHED**

Minimum documentation searched (classification system followed by classification symbols)

IPC: H04B; H04J; H04L

Documentation searched other than minimum documentation to the extent that such documents are included in the fields searched

Electronic data base consulted during the international search (name of data base and, where practicable, search terms used)

CNPAT,CNKI,WPI,EPODOC,IEEE: precod+, pre w cod+, matrix??, codebook?, creat+, generat+, multi w antenna, multi w antennae, wireless, mobile, radio, communicat+, initial+, new, channel?, match+, same, compar+

**C. DOCUMENTS CONSIDERED TO BE RELEVANT**

| Category* | Citation of document, with indication, where appropriate, of the relevant passages | Relevant to claim No. |
|---|---|---|
| A | CN101262309A (ZTE CORPORATION)　10 Sep. 2008 （10.09.2008） The whole document | 1-21 |
| A | CN101394256A (ZTE CORPORATION)　25 Mar. 2009 （25.03.2009） The whole document | 1-21 |
| A | CN101277172A (HUAWEI TECHNOLOGIES CO., LTD.)　01 Oct. 2008 （01.10.2008） The whole document | 1-21 |
| A | US2004/0022179A1 (GIANNAKIS,Georgios B. et al.)　05 Feb. 2004 （05.02.2004） The whole document | 1-21 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim (S) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 May 2010 （17.05.2010） | **24 Jun. 2010 (24.06.2010)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | **ZUO, Tianyuan** Telephone No. (86-10)62413581 |

Form PCT/ISA /210 (second sheet) (July 2009)

<table>
<tr><td colspan="2">**INTERNATIONAL SEARCH REPORT**<br>Information on patent family members</td><td colspan="2">International application No.<br>*PCT/CN2010/070264*</td></tr>
<tr><td>Patent Documents referred<br>in the Report</td><td>Publication Date</td><td>Patent Family</td><td>Publication Date</td></tr>
<tr><td>CN101262309A</td><td>10.09.2008</td><td>None</td><td></td></tr>
<tr><td>CN101394256A</td><td>25.03.2009</td><td>None</td><td></td></tr>
<tr><td>CN101277172A</td><td>01.10.2008</td><td>None</td><td></td></tr>
<tr><td>US2004/0022179A1</td><td>05.02.2004</td><td>US2004013180A1</td><td>22.01.2004</td></tr>
<tr><td></td><td></td><td>US2004066761A1</td><td>08.04.2004</td></tr>
<tr><td></td><td></td><td>US2004082303A1</td><td>29.04.2004</td></tr>
<tr><td></td><td></td><td>US2007253496A1</td><td>01.11.2007</td></tr>
</table>

Form PCT/ISA /210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1919097 A1
- US 2008080449 A1
- US 2008165876 A1
- US 2008292013 A1
- US 2008303699 A1
- US 2008316910 A1
- US 2009006518 A1
- WO 2008086239 A1
- WO 2008097035 A1
- WO 2008137523 A1